# EUROPÄISCHE PATENTSCHRIFT

(11) **EP 2 877 515 B1**
(45) Veröffentlichungstag und Bekanntmachung des Hinweises auf die Patenterteilung: **18.07.2018**
(21) Anmeldenummer: 13726193.9
(22) Anmeldetag: 29.05.2013
(51) Int. Cl.: C08G 18/62, C08G 18/79, C08G 18/80, C09D 175/04, C08G 18/28, B05D 7/00, C08K 5/09

(54) **POLYURETHAN-BESCHICHTUNGSMITTELZUSAMMENSETZUNG, MEHRSTUFIGE BESCHICHTUNGSVERFAHREN**
POLYURETHANE COATING AGENT COMPOSITIONS, MULTI-STAGE COATING METHODS
COMPOSITION D'AGENTS DE REVÊTEMENT À BASE DE POLYURÉTHANE, PROCÉDÉS DE REVÊTEMENT EN PLUSIEURS ÉTAPES

(30) Priorität: 25.07.2012 US 201261675358 P; 25.07.2012 EP 12177768
(43) Veröffentlichungstag der Anmeldung: 03.06.2015
(73) Patentinhaber: BASF Coatings GmbH, 48165 Münster (DE)
(72) Erfinder: HOFFMANN, Peter, 48308 Senden (DE); GROENEWOLT, Matthijs, 48147 Münster (DE); SCHNIER, Benedikt, 48291 Telgte (DE); WESTHOFF, Elke, 48565 Steinfurt (DE)
(74) Vertreter: BASF IP Association
(86) Internationale Anmeldenummer: PCT/EP2013/061084
(87) Internationale Veröffentlichungsnummer: WO 2014/016019

(56) Entgegenhaltungen:
- WO-A1-2011/114021
- DE-A1-102007 061 854
- US-A- 4 006 124
- US-A1- 2006 036 007
- US-A1- 2006 247 341
- US-A1- 2010 015 344

## Beschreibung

Die vorliegende Erfindung betrifft Beschichtungsmittelzusammensetzungen enthaltend mindestens eine Polyhydroxylgruppen-haltige Verbindung (A), mindestens eine Polyisocyanatgruppen-haltige Verbindung (B) und mindestens einen Katalysator (D) auf Basis eines Zink-Amidin-Komplexes.

Gegenstand der vorliegenden Erfindung sind außerdem mehrstufige Beschichtungsverfahren unter Verwendung dieser Beschichtungsmittelzusammensetzungen sowie die Verwendung der Beschichtungsmittelzusammensetzungen als Klarlack und/oder pigmentierter Lack bzw. Verwendung des Beschichtungsverfahrens für die Automobilreparaturlackierung und/oder für die Beschichtung von Automobil-Anbauteilen, von Kunststoffsubstraten und/oder Nutzfahrzeugen.

Polyurethan-Beschichtungsmittel enthalten üblicherweise einen Katalysator, wobei neben sauren Verbindungen insbesondere tertiäre Amine und/oder Metallverbindungen, wie beispielsweise verschiedene Zinnverbindungen, insbesondere Dibutylzinndilaurat und Dibutylzinnoxid, zum Einsatz kommen.

Der Einsatz zinnhaltiger Katalysatoren ist aufgrund der vielen Zinnverbindungen innewohnenden Toxizität auch in Beschichtungsmitteln zu vermeiden. Von der "Working Group on Classification and Labelling" der EU-Kommission wurden Dibutylzinnoxid (DBTO) und Dibutylzinndilaurat (DBTL) entsprechend kategorisiert.

In dem im Internet unter der Adresse www.wernerblank.com zugänglichen Artikel "Catalysis of the Isocyanate-Hydroxyl Reaction by Non-Tin Catalysts" von Werner J. Blank, Z.A. He und Ed. T. Hessell der Firma King Industries Inc. werden daher Alternativen zu den üblichen zinnhaltigen Katalysatoren auf Basis verschiedener Metallsalze und Metallkomplexe, wie Zirkoniumchelate, Aluminiumchelat und Wismuthcarboxylat, beschrieben.

Aus der DE 10 2008 061 329 A1 und der WO 09/135600 sind Beschichtungsmittel bekannt, bei denen der Einsatz metallhaltiger Katalysatoren möglichst vermieden werden soll und die stattdessen als Katalysator 1,3 substituierte Imidazoliumsalze zur Deblockierung blockierter Polyisocyanate in Polyurethan-Beschichtungsmitteln enthalten.

Die WO04/029121 beschreibt Polyurethanzusammensetzungen, die durch Zugabe von Säuren mit einem pKs-Bereich zwischen 2,8 und 4,5 in Bezug auf die Reaktivität der Zusammensetzung stabilisiert sind, wobei die Säuren gleichzeitig als Katalysator genutzt werden können. Als Säuren mit einem pKs-Bereich zwischen 2,8 und 4,5 werden dabei beispielsweise Benzoesäure, Hydroxybenzoesäure, Salicylsäure, Phthalsäure u.Ä. eingesetzt. Bevorzugt enthalten die Zusammensetzungen keinen weiteren Katalysator, es können aber auch zusätzlich noch die üblichen bekannten Polyurethan-Katalysatoren, wie tertiäre Amine oder Amidine oder metallorganische Verbindungen, wie insbesondere Zinn-Verbindungen, eingesetzt werden. Bei Verwendung von Aminen als Katalysator muss hohe Sorgfalt in Bezug auf Auswahl des Amintyps und dessen Menge verwandt werden, da die aminischen Katalysatoren zum Teil die stabilisierende Wirkung der zugesetzten organischen Säuren eliminieren können.

Außerdem beschreiben das US Patent US 7,485,729 B2 sowie die äquivalenten Schriften WO06/022899, US 2006/0247341 A1 und US 2009/0011124 A1 Organo-Metall-Verbindungen und sie enthaltende Beschichtungsmittel. Als Beschichtungsmittel werden Pulverlacke auf der Basis von hydroxylgruppenhaltigen Polyacrylaten bzw. Polyestern und uretdiongruppenhaltigen Polyisocyanaten, Flüssiglacke auf der Basis von hydroxylgruppenhaltigen Polyacrylaten bzw. Polyestern und blockierten Polyisocyanaten sowie lösemittelhaltige Beschichtungsmittel auf der Basis von Epoxy/Carboxy- bzw. Epoxy/Anhydrid-Komponenten beschrieben. Die als Katalysator eingesetzten Organo-Metall-Verbindungen sind neben anderen Metall-Amidin-Komplexen cyclische oder acyclische Zinkbiscarboxylat-Bis-Amidin-Komplexe, wie beispielsweise Zn(1,1,3,3-Tetramethylguanidin)₂(2-Ethylhexanoat)₂.

Weiterhin sind aus der WO 2001/98393, der WO08/74491, der WO 08/74490, der WO 08/74489, der WO09/077181 und der WO 10/149236 Beschichtungsmittelzusammensetzungen bekannt, die mindestens eine Hydroxylgruppenhaltige Verbindung (A), mindestens eine Isocyanatgruppen und Silangruppen enthaltende Verbindung (B) und einen für die Vernetzung der Silangruppen geeigneten Katalysator enthalten. Als Katalysator werden phosphorhaltige, insbesondere phosphor- und stickstoff-haltige Katalysatoren eingesetzt. Diese Beschichtungsmittelzusammensetzungen weisen gegenüber herkömmlichen Polyurethan-Beschichtungsmitteln den Vorteil einer deutlich verbesserten Kratzfestigkeit bei gleichzeitig guter Witterungsbeständigkeit auf.

Ferner sind in der EP-A-1 273 640 2K-Beschichtungsmittel beschrieben, enthaltend eine Polyol-Komponente und eine Vernetzerkomponente, bestehend aus aliphatischen und/oder cycloaliphatischen Polyisocyanaten oder den davon durch Polymerisierung, Allophanat-, Biuret- oder Urethanbildung abgeleiteten Polyisocyanaten, wobei 0,1 bis 95 mol-% der ursprünglich freien vorhandenen Isocyanatgruppen mit Bisalkoxysilylamin umgesetzt sind.

Schließlich sind in den noch nicht offengelegten PCT-Patentanmeldungen PCT/EP2012/052284, PCT/EP2012/051444, PCT/EP2012/051574, PCT/EP2012/054546 und der noch nicht offengelegten europäischen Patentanmeldung Nr. 12152406.0 Beschichtungsmittelzusammensetzungen beschrieben, die neben mindestens einer Polyhydroxylgruppen-haltigen Verbindung (A), mindestens einer Polyisocyanatgruppen-haltigen Verbindung (B) und mindestens einem Katalysator (D) auf Basis eines Zink-Amidin-Komplexes noch mindestens eine monomere aromatische, ggf. substituierte, Carbonsäure (S), deren Carboxylgruppe in Konjugation zu einem π-Elektronensystem steht, enthalten.

### Aufgabe

Aufgabe der vorliegenden Erfindung war es daher, Beschichtungsmittelzusammensetzungen, insbesondere für die Automobilreparaturlackierung und die Beschichtung von Nutzfahrzeugen, zur Verfügung zu stellen, die eine gute Montagefestigkeit bereits nach sehr kurzer Zeit gewährleisten, d.h. dass sie eine schnelle Aushärtung auch unter den Bedingungen der Reparaturlackierung und der Lackierung von Nutzfahrzeugen gewährleisten sollten, also bereits nach Härtung von 30 min bei 60°C soweit ausgehärtet sein sollten, dass erste Montagearbeiten oder Demaskierungen ohne Beschädigung der Beschichtung durchgeführt werden können. Gleichzeitig sollten die Beschichtungsmittelzusammensetzungen bei Raumtemperatur und nach Vermischen der Bindemittelkomponente mit der Isocyanatkomponente aber eine gute Topfzeit ("Potlife") von mindestens 2 Stunden aufweisen. Unter Topfzeit versteht man dabei die Zeitspanne, innerhalb derer die Beschichtungsmittelzusammensetzung den doppelten Wert seiner Anfangsviskosität erreicht hat. Außerdem sollten die Beschichtungsmittelzusammensetzungen zu Beschichtungen mit einer guten Durchhärtung und einer ausreichenden Endhärte führen. Ferner sollten diese Beschichtungsmittelzusammensetzungen keine Farbveränderungen vor und nach der Aushärtung aufzeigen. Besonders im Bereich von Klarlacken in der Automobilindustrie bestehen hohe Anforderungen an die Eigenfarbe der Systeme. So darf der Katalysator weder eine Eigenfarbe aufweisen, noch darf er mit den üblichen Lackkomponenten zu einer Verfärbung bei der Anmischung oder der Aushärtung des Lackes führen.

Des Weiteren sollte der Katalysator der Bindemittelkomponente der Beschichtungsmittelzusammensetzung von vornherein zugegeben werden können. Jedoch soll diese Beimischung des Katalysators zu der Bindemittelkomponente von Anfang an nicht deren Lagerstabilität negativ beeinflussen. Zudem sollte der Katalysator hydrolyseunempfindlich sein, da selbst in organisch gelösten Systemen die üblicherweise hohe Konzentration an Hydroxylgruppen zu einer Reduzierung der Katalysatoraktivität über die Lagerzeit führen kann. Speziell im Bereich der Autoreparaturlackierung ist eine extrem hohe Lagerstabilität auch bei höheren Temperaturen von Vorteil. Außerdem sollten die Beschichtungsmittelzusammensetzungen zu Beschichtungen führen, die hochgradig kratzfest sind und insbesondere einen hohen Glanzerhalt nach Kratzbelastung aufweisen und zu einem hochgradig witterungsstabilen Netzwerk führen sowie gleichzeitig eine hohe Säurefestigkeit gewährleisten. Weiterhin sollten sich die Beschichtungen und Lackierungen, speziell die Klarlackierungen, auch in Schichtdicken > 40 µm herstellen lassen, ohne dass Spannungsrisse auftreten. Ferner sollte auch ein guter optischer Gesamteindruck, ein sogenanntes gutes Appearance, gewährleistet sein.

Schließlich sollten die neuen Beschichtungsmittel einfach und sehr gut reproduzierbar herstellbar sein und während der Lackapplikation keine ökologischen Probleme bereiten.

### Lösung der Aufgabe

Im Lichte der obengenannten Aufgabenstellung wurden nichtwässrige Beschichtungsmittelzusammensetzungen gefunden, enthaltend
(A) mindestens eine Polyhydroxylgruppen-haltige Verbindung (A),
(B) mindestens eine Polyisocyanatgruppen-haltige Verbindung (B) mit freien oder blockierten Isocyanatgruppen und
   und
(D) mindestens einen Katalysator (D) auf Basis eines Zink-Amidin-Komplexes, der herstellbar ist durch Umsetzung eines oder mehrerer Zink(II)biscarboxylate mit einem Amidin der Formel (I) oder mit einer Mischung aus zwei oder mehreren Amidinen der Formel (I)

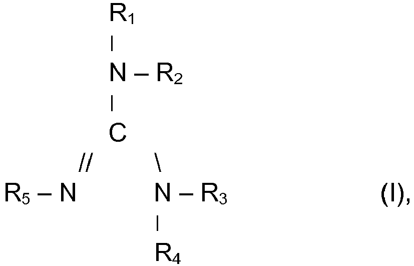

wobei R₅ = Wasserstoff und R₁, R₂, R₃, und R₄ jeweils gleiche oder verschiedene Reste sind, wobei R₁ und R₃ Wasserstoff oder ein Alkylrest oder ein Arylrest sind und R₂ und R₄ ein Alkylrest oder ein Arylrest sind,
dadurch gekennzeichnet, dass
die Komponente (B) mindestens eine Struktureinheit der Formel (II)

   -NR-(X-SiR"x(OR')3-x) (II),
und/oder mindestens eine Struktureinheit der Formel (III)

   -N(X-SiR"x(OR')3-x)n(X'-SiR"y(OR')3-y)m (III),
mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen- oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 sowie x, y = 0 bis 2 ist,
aufweist und dass die Beschichtungsmittelzusammensetzung
(S) mindestens eine monomere aromatische ggf. substituierte Carbonsäure (S),
   deren Carboxylgruppe in Konjugation zu einem π-Elektronensystem steht, enthält.

Gegenstand der vorliegenden Erfindung sind außerdem mehrstufige Beschichtungsverfahren unter Verwendung dieser Beschichtungsmittelzusammensetzungen sowie die Verwendung der Beschichtungsmittelzusammensetzungen als Klarlack und/oder pigmentierter Lack bzw. Verwendung des Beschichtungsverfahrens für die Automobilserienlackierung, die Automobilreparaturlackierung und/oder für die Beschichtung von Automobil-Anbauteilen, von Kunststoffsubstraten und/oder von Nutzfahrzeugen.

Es ist überraschend und war nicht vorhersehbar, dass die Beschichtungsmittelzusammensetzungen auch unter den Bedingungen für die Automobilreparaturlackierung eine gute Montagefestigkeit bereits nach sehr kurzer Zeit gewährleisten, d.h. dass sie eine schnelle Aushärtung auch unter den Bedingungen der Reparaturlackierung gewährleisten, also nach Härtung bei 60°C möglichst frühzeitig klebfrei sind. Gleichzeitig zeigen die Beschichtungsmittelzusammensetzungen bei Raumtemperatur und nach Vermischen der Bindemittelkomponente mit der Isocyanatkomponente aber eine gute Topfzeit ("Potlife") von mindestens 2 Stunden. Unter Topfzeit versteht man dabei die Zeitspanne, innerhalb derer die Beschichtungsmittelzusammensetzung den doppelten Wert seiner Anfangsviskosität erreicht hat.

Außerdem führen die Beschichtungsmittelzusammensetzungen zu Beschichtungen mit einer guten Durchhärtung und einer ausreichenden Endhärte. Ferner zeigt der Katalysator weder eine Eigenfarbe, noch führt er mit den üblichen Lackkomponenten zu einer Verfärbung bei der Anmischung oder der Aushärtung des Lackes.

Des Weiteren kann der Bindemittelkomponente der Beschichtungsmittelzusammensetzung der Katalysator von vornherein zugegeben werden, ohne dass dadurch die Lagerstabilität der Bindemittelhaltigen Komponente der Beschichtungsmittelzusammensetzung negativ beeinflusst wird. Zudem ist der Katalysator hydrolyseunempfindlich, so dass die üblicherweise hohe Konzentration an Hydroxylgruppen selbst in organisch gelösten Systemen zu keiner Reduzierung der Katalysatoraktivität über die Lagerzeit führt, was speziell im Bereich der Autoreparaturlackierung von Vorteil ist.

Die Beschichtungsmittelzusammensetzungen führen außerdem zu Beschichtungen, die hochgradig kratzfest sind und insbesondere einen hohen Glanzerhalt nach Kratzbelastung aufweisen.

Ferner führen die Beschichtungsmittelzusammensetzungen zu einem hochgradig witterungsstabilen Netzwerk und gewährleisten gleichzeitig eine hohe Säurefestigkeit der Beschichtungen. Weiterhin lassen sich die Beschichtungen und Lackierungen, speziell die Klarlackierungen, auch in Schichtdicken > 40 µm herstellen, ohne dass Spannungsrisse auftreten. Ferner ist auch ein guter optischer Gesamteindruck, ein sogenanntes gutes Appearance, gewährleistet.

Schließlich sind die neuen Beschichtungsmittelzusammensetzungen einfach und sehr gut reproduzierbar herstellbar und bereiten während der Lackapplikation keine ökologischen Probleme.

### Beschreibung der Erfindung

### Die erfindungsgemäßen Beschichtungsmittel

Insbesondere handelt es sich bei den erfindungsgemäßen Beschichtungsmitteln um thermisch härtbare Beschichtungsmittel, also bevorzugt um Beschichtungsmittel, die im Wesentlichen frei sind von strahlenhärtbaren ungesättigten Verbindungen, insbesondere völlig frei sind von strahlenhärtbaren ungesättigten Verbindungen.

### Die Polyhydroxylgruppen-haltige Verbindung (A)

Als Polyhydroxylgruppen-haltige Verbindung (A) können alle dem Fachmann bekannten Verbindungen eingesetzt werden, welche mindestens 2 Hydroxylgruppen pro Molekül aufweisen und oligomer und/oder polymer sind. Es können als Komponente (A) auch Mischungen verschiedener oligomerer und/oder polymerer Polyole eingesetzt werden.

Die bevorzugten oligo- und/oder polymeren Polyole (A) weisen massenmittlere Molekulargewichte Mw > 500 Dalton, gemessen mittels Gelpermeationschromatographie (GPC) gegen einen Polystyrolstandard, bevorzugt zwischen 800 und 100.000 Dalton, insbesondere zwischen 1.000 und 50.000 Dalton auf.

Besonders bevorzugt sind Polyesterpolyole, Polyurethanpolyole, Polysiloxanpolyole, Polyacrylatpolyole und/oder Polymethacrylatpolyole sowie deren Mischpolymerisate, im folgenden Polyacrylatpolyole genannt.

Die Polyole weisen bevorzugt eine OH-Zahl von 30 bis 400 mg KOH/g, insbesondere zwischen 100 und 300 KOH/g, auf. Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert
(DIN 53240-2). Im Falle reiner Poly-(Meth)-Acrylate kann die OH-Zahl auch durch Berechnung auf Basis der eingesetzten OH-funktionellen Monomere ausreichend genau bestimmt werden.

Die Glasübergangstemperaturen, gemessen mit Hilfe von DSC-Messungen nach DIN-EN-ISO 11357-2, der Polyole liegen bevorzugt zwischen -150 und 100 °C, besonders bevorzugt zwischen -120°C und 80°C.

Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in
EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Ganz besonders bevorzugt enthält die Komponente (A) ein oder mehrere Polyacrylatpolyole und/oder Polymethacrylatpolyole. Zusammen mit dem oder den Polyacrylatpolyolen und/oder Polymethacrylatpolyolen können weitere oligomere und/oder polymere Polyhydroxylgruppen-haltige Verbindungen, beispielsweise Polyesterpolyole, Polyurethanpolyole und Polysiloxanpolyole, insbesondere Polyesterpolyole, eingesetzt werden.

Die erfindungsgemäß ganz besonders bevorzugten Poly(meth)acrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Die Glasübergangstemperatur der Copolymerisate liegt in der Regel zwischen -100 und 100 °C, insbesondere zwischen -60 und < 20 °C (gemessen mittels DSC-Messungen nach DIN-EN-ISO 11357-2).

Die Poly(meth)acrylatpolyole weisen bevorzugt eine OH-Zahl von 60 bis 300 mg KOH/g, insbesondere zwischen 70 und 200 KOH/g, sowie eine Säurezahl zwischen 0 und 30 mg KOH/g auf.

Die Hydroxylzahl (OH-Zahl) wird wie oben beschrieben bestimmt (DIN 53240-2). Die Säurezahl gibt hierbei die Anzahl der mg Kaliumhydroxid an, die zur Neutralisation von 1 g der jeweiligen Verbindung verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

### Hydroxylgruppenhaltige Verbindungen (C)

Die erfindungsgemäßen Beschichtungsmittelzusammensetzungen können ggf. außer der Polyhydroxylgruppen-haltigen Komponente (A) noch ein oder mehrere, von der Komponente (A) verschiedene, monomere hydroxylgruppenhaltige Verbindungen (C) enthalten. Bevorzugt nehmen diese Verbindungen (C) einen Anteil von 0 bis 20 Gew.-%, besonders bevorzugt von 0 bis 10 Gew.-%, ganz besonders bevorzugt von 1 bis 5 Gew.-%, jeweils bezogen auf den Bindemittelanteil der Beschichtungsmittelzusammensetzung, ein.

Als hydroxylgruppenhaltige Verbindung (C) werden niedermolekulare Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt. Bevorzugt werden solche niedermolekularen Polyole in untergeordneten Anteilen der Polyolkomponente (A) beigemischt.

### Die Polyisocyanatgruppenhaltige Komponente (B)

Die als Grundkörper für die erfindungsgemäß bevorzugt eingesetzten isocyanatgruppenhaltigen Verbindungen (B) dienenden Di- und/oder Polyisocyanate sind bevorzugt an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydro-toluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Weiterhin bevorzugte Polyisocyanate sind die Isocyanurat- Trimere und/oder Allophanat- Dimere und/oder Biuret-Dimere und/oder Uretdion-Dimere der vorgenannten Diisocyanate.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4,598,131 beschrieben.

Besonders bevorzugte Polyisocyanatgrundkörper für die Komponente (B) sind Hexamethylendiisocyanat, Isophorondiisocyanat und 4,4'-Methylendicyclohexyldiisocyanat und/oder deren Isocyanurat- Trimeres und/oder deren Allophanat- Dimeres und/oder deren Biuret- Dimeres und/oder deren Uretdion-Dimeres.

Die als Komponente (B) eingesetzten Polyisocyanate bzw. deren Isocyanurat- Trimere und/oder deren Allophanat- Dimere und/oder deren Biuret- Dimere und/oder deren Uretdion-Dimere enthalten zusätzlich noch mindestens eine Struktureinheit der Formel (II)

-NR-(X-SiR"x(OR')3-x) (II),

und/oder mindestens eine Struktureinheit der Formel (III)

-N(X-SiR"x(OR')3-x)n(X'-SiR"y(OR')3-y)m (III),

wobei
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen- oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 sowie x, y = 0 bis 2 ist.

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X, X' zwischen Silan - Funktionalität und organischer funktioneller Gruppe, die zur Reaktion mit dem zu modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silanen vorhandenen Propylengruppe zwischen Si-Atom und funktioneller Gruppe ist.

Die erfindungsgemäß bevorzugt eingesetzten, mit den Struktureinheiten (II) und/oder (III) funktionalisierten Komponenten (B) werden insbesondere durch Umsetzung von Polyisocyanaten bzw. von deren Isocyanurat- Trimeren und/oder deren Allophanat- Dimeren und/oder deren Biuret- Dimeren und/oder deren Uretdion-Dimeren mit mindestens einer Verbindung der Formel (IIa)

H-NR-(X-SiR"ₓ(OR')₃₋ₓ) (IIa),

und/oder mit mindestens einer Verbindung der Formel (IIIa)

HN(X-SiR"ₓ(OR')₃₋ₓ)ₙ(X'-SiR"_{y}(OR')_{3-y})ₘ (IIIa),

erhalten, wobei die Substituenten die oben genannte Bedeutung haben.

Die erfindungsgemäß besonders bevorzugt eingesetzten, mit den Struktureinheiten (II) und (III) funktionalisierten Komponenten (B) werden besonders bevorzugt durch Umsetzung von Polyisocyanaten bzw. von deren Isocyanurat- Trimeren und/oder deren Allophanat- Dimeren und/oder deren Biuret- Dimeren und/oder deren Uretdion-Dimeren mit mindestens einer Verbindung der Formel (IIa) und mit mindestens einer Verbindung der Formel (IIIa) erhalten, wobei die Substituenten die oben genannte Bedeutung haben.

Erfindungsgemäß bevorzugte Verbindungen (IIIa) sind Bis(2-ethyltrimethoxy-silyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASYLAN ® der Fa. DEGUSSA bzw. Silquest ® der Fa. OSI verfügbar.

Erfindungsgemäß bevorzugte Verbindungen (IIa) sind N-(2- (trimethoxysilyl)ethyl)-alkylamine, N-(3-(trimethoxysilyl)propyl)alkylamine, N-(4-(trimethoxysilyl)butyl) alkylamine, N-(2-(triethoxysilyl)ethyl)alkylamine, N-(3-(triethoxysilyl)propyl)alkylamine und/oder N-(4-(triethoxysilyl)butyl)alkylamine. Ganz besonders bevorzugt ist N-(3-(trimethoxysilyl) propyl)butylamin. Solche Aminosilane sind beispielsweise unter dem Markennamen DYNASYLAN ® der Fa. DEGUSSA bzw. Silquest ® der Fa. OSI verfügbar.

Bevorzugt sind in der Komponente (B) zwischen 10 und 90 mol-%, bevorzugt zwischen 20 und 80 mol-%, besonders bevorzugt mehr als 30 und weniger als 70 mol-% und ganz besonders bevorzugt zwischen 31 und 50 mol-%, der ursprünglich vorhandenen Isocyanatgruppen zu Struktureinheiten (II) und/oder (III) umgesetzt worden.

Der Gehalt an Struktureinheiten (II) in der Komponente (B) liegt bevorzugt zwischen 5 und 70 mol-%, besonders bevorzugt zwischen 8 und 50 mol-%, ganz besonders bevorzugt zwischen 9 und 40 mol-% jeweils bezogen auf die Gesamtheit der Struktureinheiten (II) plus (III), und der Gesamtgehalt an Struktureinheiten (III) in der Komponente (B) liegt bevorzugt zwischen 95 und 30 mol-%, besonders bevorzugt zwischen 92 und 50 mol-% und ganz besonders bevorzugt zwischen 91 und 60 mol-%, jeweils bezogen auf die Gesamtheit der Struktureinheiten (II) plus (III).

Es ist ferner besonders bevorzugt, dass in der Polyisocyanat-Komponente (B) mehr als 25 mol-% und weniger als 36 mol-%, bevorzugt zwischen 26 und 35 mol-%, der ursprünglich vorhandenen Isocyanatgruppen zu Bissilanstruktureinheiten (III) umgesetzt worden sind.

Ganz besonders bevorzugte Beschichtungsmittelzusammensetzungen werden erhalten, wenn in der Komponente (B)
der Gesamtgehalt an Struktureinheiten (II) zwischen 9 und 40 mol-% und der Gesamtgehalt an Struktureinheiten (III) zwischen 91 und 60 mol-%, jeweils bezogen auf die Gesamtheit der Struktureinheiten (II) plus (III), liegt
und
zwischen 31 und 50 mol-%, der ursprünglich in (B) vorhandenen Isocyanatgruppen zu Struktureinheiten (II) und(III) umgesetzt worden sind
und
in der Komponente (B) zwischen 26 und 35 mol-% der ursprünglich vorhandenen Isocyanatgruppen zu Struktureinheiten (III) umgesetzt worden sind.

Die Umsetzung der isocyanatgruppenhaltigen Verbindungen (B) mit den Verbindungen (IIa) und/oder (IIIa) erfolgt vorzugsweise in Inertgasatmosphäre bei Temperaturen von maximal 100 °C, bevorzugt von maximal 60 °C.

Die freien Isocyanatgruppen der isocyanatgruppenhaltigen Verbindungen B können auch in blockierter Form eingesetzt werden. Dies ist bevorzugt dann der Fall, wenn die erfindungsgemäßen Beschichtungsmittel als einkomponentige Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Bevorzugt werden Blockierungsmittel, wie sie in EP-A-0 626 888 und EP-A-0 692 007 beschrieben sind, eingesetzt.

### Katalysator (D)

Die Beschichtungsmittelzusammensetzung enthält mindestens einen Katalysator (D) auf Basis eines Zink-Amidin-Komplexes, der herstellbar ist durch Umsetzung eines oder mehrerer Zink(II)biscarboxylate mit einem Amidin der Formel (I) oder mit einer Mischung aus zwei oder mehreren Amidinen der Formel (I) 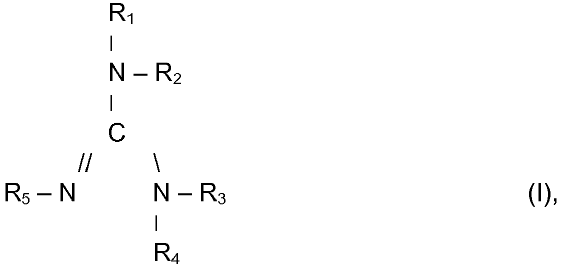 wobei R₅ = Wasserstoff und R₁, R₂, R₃, und R₄ jeweils gleiche oder verschiedene Reste sind, wobei R₁ und R₃ Wasserstoff oder ein Alkylrest oder ein Arylrest sind und R₂ und R₄ ein Alkylrest oder ein Arylrest sind.

Bevorzugt ist der Zink-Amidin-Komplex entweder herstellbar durch Umsetzung von 1,0 Molen eines oder mehrerer Zink(II)biscarboxylate mit mindestens 0,1 Molen, bevorzugt mit 1,0 bis 4,0 Molen, besonders bevorzugt mit 1,5 Molen bis 3,0 Molen und ganz besonders bevorzugt mit 2,0 bis 3,0 Molen, eines Amidins der Formel (I) oder herstellbar durch Umsetzung von 1,0 Molen eines oder mehrerer Zink(II)-biscarboxylate mit mindestens 0,1 Molen, bevorzugt mit 1,0 bis 4,0 Molen, besonders bevorzugt mit 1,5 Molen bis 3,0 Molen und ganz besonders bevorzugt mit 2,0 bis 3,0 Molen, einer Mischung aus zwei oder mehreren Amidinen der Formel (I).

Besonders bevorzugt ist der Katalysator (D) herstellbar durch Umsetzung von 1,0 Molen eines Zink(II)biscarboxylates mit mindestens 0,1 Molen, bevorzugt mit 1,0 bis 4,0 Molen, besonders bevorzugt mit 1,5 Molen bis 3,0 Molen und ganz besonders bevorzugt mit 2,0 bis 3,0 Molen, eines Amidins der Formel (I).

Die Reste R₂ und R₄ sind bevorzugt gleiche oder verschiedene acyclische, geradkettige oder verzweigte Alkylreste und/oder gleiche oder verschiedene Arylreste. Bevorzugt sind die Reste R₁ und R₃ Wasserstoff oder gleiche oder verschiedene acyclische, geradkettige oder verzweigte Alkylreste und/oder gleiche oder verschiedene Arylreste. Die Alkylreste können jeweils ggf. vorliegen als Ester, Ether, Etherester und Ketone. Die Arylreste können substituiert sein mit aliphatischen Estern, Ethern, Etherestern und Ketonen oder als aromatische Ester, Ether, Etherester und Ketone vorliegen.

Besonders bevorzugt sind die Reste R₁, R₂, R₃, und R₄ jeweils gleiche oder verschiedene acyclische aliphatische Reste, ganz besonders bevorzugt weisen diese Reste R₁, R₂, R₃, und R₄ eins bis vier Kohlenstoffatome auf. Besonders bevorzugt sind die Reste R₁, R₂, R₃, und R₄ Methylreste.

Bevorzugte Zink-Amidin-Komplexe (D) sind außerdem solche, bei denen der Carboxylat-Rest des Zink-Amidin-Komplexes (D) ausgewählt ist aus der Gruppe der Carboxylat-Reste von aliphatischen linearen und/oder verzweigten, ggf. substituierten Monocarbonsäuren mit 1 bis 12 C-Atomen im Alkylrest und/oder von aromatischen, ggf. substituierten Monocarbonsäuren mit 6 bis 12 C-Atomen im Arylrest. Der Carboxylatrest bestimmt weitgehend die Löslichkeit des resultierenden Komplexes in den eingesetzten Lackkomponenten. Ganz besonders bevorzugt werden daher in den erfindungsgemäßen Beschichtungsmittelzusammensetzungen Zink-Amidin-Komplexe eingesetzt, die durch Umsetzung von 1,0 Molen Zink(II)bis(2-ethylhexanoat) mit 2,0 bis 3,0 Molen eines Amidins (I) erhältlich sind.

Besonders bevorzugt sind Beschichtungsmittelzusammensetzungen, die als Komponente (D) Zn(1,1,3,3-Tetramethylguanidin)ₐ(acetat)₂, Zn(1,1,3,3-Tetramethylguanidin)ₐ(formiat)₂, Zn(1,1,3,3-Tetramethylguanidin)ₐ(benzoat)₂, Zn(1,1,3,3-Tetramethylguanidin)ₐ(2-Ethylhexanoat)₂, Zn(1,1,3,3-Tetramethylguanidin)ₐ(octoat)₂, Zn(1,1,3,3-Tetramethylguanidin)ₐ(neodecanoat)₂, Zn(1,3-Diphenylguanidin)ₐ(formiat)₂, Zn(1,3-Diphenylguanidin)ₐ(acetat)₂, Zn(1,3-Diphenylguanidin)ₐ(benzoat)₂, Zn(1,3-Diphenylguanidin)ₐ(2-Ethylhexanoat)₂, Zn(1,3-Diphenylguanidin)ₐ-(octoat)₂,und/oder Zn(1,3-Diphenylguanidin)ₐ(neodecanoat)₂, bevorzugt Zn(1,1,3,3-Tetramethylguanidin)ₐ(2-Ethylhexanoat)₂ und/oder Zn(1,1,3,3-Tetramethylguanidin)ₐ(octoat)₂ und/oder Zn(1,1,3,3-Tetramethylguanidin)ₐ(neodecanoat)₂, und/oder Zn(1,3-Diphenylguanidin)ₐ(2-Ethylhexanoat)₂ und/oder Zn(1,3-Diphenyl-guanidin)a(octoat)2 enthalten, wobei jeweils besonders bevorzugt a = 1,0 bis 4,0 und ganz besonders bevorzugt a = 2,0 bis 3,0 ist. Ganz besonders bevorzugt sind Beschichtungsmittelzusammensetzungen, die als Komponente (D) Zn(1, 1,3,3-Tetramethylguanidin)ₐ(2-Ethylhexanoat)₂ und/oder Zn(1, 1,3,3-Tetramethylguanidin)ₐ(octoat)₂ und/oder Zn(1, 1,3,3-Tetramethylguanidin)ₐ(neo-decanoat)₂ enthalten, wobei jeweils besonders bevorzugt a = 1,0 bis 4,0 und ganz besonders bevorzugt a = 2,0 bis 3,0 ist.

Die Umsetzung des bzw. der Zink(II)biscarboxylate mit dem bzw. den Amidin(en) (I) erfolgt üblicherweise in einem aprotischen Lösemittel. Als Lösemittel kommen hierbei insbesondere solche Lösemittel zum Einsatz, die eine ausreichende Löslichkeit der Zink(II)biscarboxylate und der Zink-Amidine ermöglichen und die im Beschichtungsmittel chemisch inert gegenüber den Verbindungen (A), (B), (D), (S) und ggf. (C) sind und die auch bei der Härtung des Beschichtungsmittels nicht mit (A), ggf. (C), (B), (D) und (S) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel, auf.

Die Umsetzung des bzw. der Zink(II)biscarboxylate mit dem bzw. den Amidin(en) (I) kann auch in der Polyhydroxylgruppen-haltigen Komponente (A) und/oder in den als Komponente (C) aufgeführten niedermolekularen Alkoholen, ggf. im Gemisch mit weiteren Lösemitteln - wie insbesondere den gerade aufgeführten Lösemitteln (L) - erfolgen.

Es ist auch möglich, die Umsetzung des bzw. der Zink(II)biscarboxylate mit dem bzw. den Amidin(en) (I) in der Gesamtmischung der Lackkomponente (K-I) (sogenannte "Bindemittelkomponente"), enthaltend die hydroxylgruppenhaltigen Verbindungen (A) und ggf. (C), ggf. das Lösemittel und ggf. ein oder mehrere der unten aufgeführten Lackadditive (F), durchzuführen.

Die Umsetzung des bzw. der Zink(II)biscarboxylate mit dem bzw. den Amidin(en) (I) erfolgt üblicherweise bei Raumtemperatur oder leicht erhöhter Temperatur von bis zu 100°C. Dabei wird in der Regel das Zink(II)biscarboxylat in dem Lösemittel bzw. der hydroxylgruppenhaltigen Verbindung (A) und/oder (C) - wie gerade beschrieben - vorgelegt und die Amidinverbindung, ggf. gelöst in einem der genannten Lösemittel, langsam zugetropft. Die entstehende Wärmeentwicklung wartet man ab und rührt dann die Mischung noch weitere 2 Stunden bei mindestens 60°C.

Zusätzlich ist es möglich, insbesondere dann, wenn es sich bei den Beschichtungsmittelzusammensetzungen um 2-komponentige Beschichtungsmittelzusammensetzungen handelt, die aktive Katalysatorverbindung (D) in situ herzustellen. Dazu wird eine entsprechende Menge des Amidins oder der Amidine in der das hydroxylgruppenhaltige Bindemittel (A) und ggf. (C) enthaltenden Lackkomponente (K-I) und eine entsprechende Menge des Zink(II)biscarboxylates in der die Polyisocyanatgruppen-haltige Verbindung (B) enthaltenden Lackkomponente (K-II) gelöst. Beim Mischen der beiden Lackkomponenten vor der Applikation wird dann der Zink-Amidin-Komplex in-situ in der Beschichtungsmittelzusammensetzung gebildet.

### Monomere Aromatische Carbonsäure (S)

Es ist ferner erfindungswesentlich, dass die Beschichtungsmittelzusammensetzung mindestens eine monomere aromatische, ggf. substituierte Carbonsäure (S) enthält, deren Carboxylgruppe in Konjugation zu einem π-Elektronensystem steht. Dabei kann die Anzahl der Carboxylgruppen variieren, wobei die Carbonsäuren bevorzugt eine Carboxylgruppe aufweisen. Bevorzugt weisen die monomeren aromatischen, ggf. substituierten Carbonsäuren ein Molekulargewicht < 500 g/mol, besonders bevorzugt < 300 g/mol, auf. Bevorzugt werden monomere aromatische, ggf. substituierte Carbonsäuren eingesetzt, die einen pKs-Wert von 2 bis 5 aufweisen. Der pKs-Wert entspricht dem pH-Wert am Halbäquivalentspunkt, wobei das Lösungsmedium vorzugsweise Wasser ist. Sollte für eine Säure die Angabe eines pKs-Wertes in Wasser nicht möglich sein, so wird als Medium vorzugsweise DMSO gewählt oder aber ein anderes geeignetes Medium, in dem die Säure löslich ist.

Geeignet sind monomere aromatische Mono- und Polycarbonsäuren, die entsprechenden Alkyl- und Aryl-substituierten aromatischen Mono- und Polycarbonsäuren sowie die entsprechenden hydroxylgruppenhaltigen aromatischen Mono- und Polycarbonsäuren, wie beispielsweise Phthalsäure und Terephthalsäure, Alkyl- bzw. Aryl-substituierte Phthalsäure und Terephthalsäure, Benzoesäure und Alkyl- bzw. Aryl-substituierte Benzoesäure, aromatische Carbonsäuren mit weiteren funktionellen Gruppen wie Salicylsäure und Acetylsalicylsäure, Alkyl- bzw. Aryl-substituierte Salicylsäure oder Isomere davon, mehrkernige aromatische Carbonsäuren, wie die Isomeren der Naphthalincarbonsäure und deren Derivate.

Bevorzugt enthält die Beschichtungsmittelzusammensetzung als monomere aromatische Carbonsäure (S) Benzoesäure, tert.-Butylbenzoesäure, 3,4-Dihydroxybenzoesäure, Salicylsäure und/oder Acetylsalicylsäure, besonders bevorzugt Benzoesäure.

### Die Kombination der Komponenten (A), (B), ggf. (C), (D) und (S) sowie weitere Komponenten der Beschichtungsmittelzusammensetzungen

Handelt es sich um einkomponentige Beschichtungsmittelzusammensetzungen, so werden Polyisocyanatgruppen-haltige Verbindungen (B) gewählt, deren freie Isocyanatgruppen mit Blockierungsmitteln blockiert sind. Beispielsweise können die Isocyanatgruppen mit substituierten Pyrazolen, insbesondere mit Alkyl-substituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Besonders bevorzugt werden die Isocyanatgruppen der Komponente (B) mit 3,5-Dimethylpyrazol blockiert.

Bei den erfindungsgemäß besonders bevorzugten 2-komponentigen (2K) Beschichtungsmittelzusammensetzungen wird kurz vor der Applikation des Beschichtungsmittels eine Lackkomponente, enthaltend die Polyhydroxylgruppen-haltige Verbindung (A) sowie weitere nachfolgend beschriebene Komponenten, mit einer weiteren Lackkomponente, enthaltend die Polyisocyanatgruppen-haltige Verbindung (B) sowie gegebenenfalls weitere der nachfolgend beschriebenen Komponenten in an sich bekannter Weise vermischt, wobei in der Regel die Lackkomponente, die die Verbindung (A) enthält, den Katalysator (D) sowie einen Teil des Lösemittels enthält.

Die Polyhydroxykomponente (A) kann in einem geeigneten Lösemittel vorliegen. Geeignete Lösemittel sind solche, die eine ausreichende Löslichkeit der Polyhydroxykomponente ermöglichen. Beispiele für solche Lösemittel sind die bereits oben aufgeführten Lösemittel (L).

Die Gewichtsanteile des Polyols (A) und ggf. (C) und des Polyisocyanates (B) werden vorzugsweise solchermaßen gewählt, dass das molare Äquivalentverhältnis der Hydroxylgruppen der Polyhydroxylgruppen-haltigen Verbindung (A) plus ggf. (C) zu den Isocyanatgruppen der Komponente (B) zwischen 1:0,9 und 1:1,5, bevorzugt zwischen 1:0,9 und 1:1,1 besonders bevorzugt zwischen 1:0,95 und 1:1,05, liegt.

Bevorzugt werden erfindungsgemäß Beschichtungsmittelzusammensetzungen eingesetzt, die von 20 bis 80 Gew.-%, bevorzugt von 30 bis 70 Gew.-%, jeweils bezogen auf den Bindemittelgehalt der Beschichtungsmittelzusammensetzung, mindestens einer Polyhydroxylgruppen-haltigen Verbindung (A), insbesondere mindestens eines Polyhydroxylgruppen-haltigen Polyacrylates (A) und/oder mindestens eines Polyhydroxylgruppen-haltigen Polymethacrylates (A), enthalten.

Ebenfalls bevorzugt werden erfindungsgemäß Beschichtungsmittelzusammensetzungen eingesetzt, die von 5 bis 79 Gew.-%, bevorzugt von 25 bis 69 Gew.-%, jeweils bezogen auf den Bindemittelgehalt der Beschichtungsmittelzusammensetzung, der Polyisocyanatgruppen-haltigen Verbindung (B) enthalten.

Bevorzugt enthalten die erfindungsgemäßen Beschichtungsmittelzusammensetzungen außerdem mindestens einen Zink-Amidin-Komplex (D) in einer solchen Menge, dass der Metallgehalt des Zink-Amidin-Komplexes, jeweils bezogen auf den Bindemittelgehalt der Beschichtungsmittelzusammensetzung, zwischen 35 und 2000 ppm, bevorzugt zwischen 35 und 1000 ppm und besonders bevorzugt zwischen 100 und 1000 ppm, liegt.

Bevorzugt enthalten die erfindungsgemäßen Beschichtungsmittelzusammensetzungen außerdem 0,2 bis 15,0 Gew.-%, bevorzugt 0,5 bis 8,0 Gew.-% und besonders bevorzugt 0,5 bis 5,0 Gew.-%, mindestens einer aromatischen Carbonsäure (S), wobei die Gew.-%-Angaben jeweils bezogen sind auf den Bindemittelgehalt der Beschichtungsmittelzusammensetzung.

Unter Bindemittelanteil ist jeweils der in Tetrahydrofuran (THF) lösliche Anteil der Beschichtungsmittelzusammensetzung vor der Vernetzung zu verstehen. Dazu wird eine kleine Probe (P) gewogen, in der 50- bis 100-fachen Menge THF gelöst, unlösliche Bestandteile werden abfiltriert, das THF abgedampft und daran anschließend der Festkörper der zuvor in THF gelösten Bestandteile bestimmt, indem für 60 Minuten bei 130°C getrocknet wird, im Exsikkator abgekühlt wird und dann erneut gewogen wird. Der Rückstand entspricht dem Bindemittelgehalt der Probe (P).

Die erfindungsgemäßen Beschichtungsmittelzusammensetzungen sind bevorzugt nichtwässrige Beschichtungsmittel und können Lösemittel enthalten oder als lösemittelfreie Systeme formuliert sein. Beispiele für geeignete Lösemittel sind die bereits oben aufgeführten Lösemittel (L). Das bzw. die Lösemittel werden in den erfindungsgemäßen Beschichtungsmittelzusammensetzungen bevorzugt in einer solchen Menge eingesetzt, dass der Festkörpergehalt der Beschichtungsmittelzusammensetzung mindestens 50 Gew.-%, besonders bevorzugt mindestens 60 Gew.-% beträgt.

Weiterhin können die erfindungsgemäßen Beschichtungsmittelzusammensetzungen 0 bis 30 Gew.-%, bevorzugt 0 bis 15 Gew.-%, jeweils bezogen auf den Bindemittelgehalt der Beschichtungsmittelzusammensetzung, eines oder mehrerer Aminoplastharze und/oder eines oder mehrerer Tris(Alkoxycarbonylamino)Triazine (E) enthalten.

Beispiele für geeignete Tris(Alkoxycarbonylamino)Triazine sind in der US-A-4 939 213, der US-A- 5 084 541 und der EP-A-0 624 577 genannt.

Beispiele für geeignete Aminoplastharze (E) sind alle im Bereich der Lackindustrie üblicherweise eingesetzten Aminoplastharze, wobei über die Reativität des Aminoplastharzes die Eigenschaften der resultierenden Beschichtungsmittel gesteuert werden können. Es handelt sich um Kondensationsprodukte aus Aldehyden, insbesondere Formaldehyd, und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Es werden insbesondere mit niedrigen Alkoholen veretherte Aminoplastharze eingesetzt. Bevorzugt werden mit Methanol und/oder Ethanol und/oder Butanol veretherte Aminoplastharze, beispielsweise in dem Handel unter den Bezeichnungen Cymel®, Resimene®, Maprenal® und Luwipal® erhältlichen Produkte, eingesetzt.

Die Aminoplastharze (E) sind altbekannte Verbindungen und werden beispielsweise im Detail in der amerikanischen Patentanmeldung
US 2005/0182189 A1, Seite 1, Absatz [0014], bis Seite 4, Absatz [0028], beschrieben.

Darüber hinaus kann die erfindungsgemäße Bindemittelmischung bzw. die erfindungsgemäße Beschichtungsmittelzusammensetzung mindestens ein übliches und bekanntes Lackadditiv (F) in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf den Bindemittelgehalt der Beschichtungsmittelzusammensetzung, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol® oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- von den Komponenten (A) und (C) verschiedene rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- Flammschutzmittel.

Besonders bevorzugt sind Beschichtungsmittelzusammensetzungen, die 30 bis 70 Gew.-%, bezogen auf den Bindemittelgehalt der Beschichtungsmittelzusammensetzung, mindestens eines Polyhydroxylgruppen-haltigen Polyacrylates (A) und/oder mindestens eines Polyhydroxylgruppen-haltigen Polymethacrylates (A), 25 bis 69 Gew.-%, bezogen auf den Bindemittelgehalt der Beschichtungsmittelzusammensetzung, der Polyisocyanatgruppen-haltigen Verbindung (B),
0 bis 10 Gew.-%, bezogen auf den Bindemittelgehalt der Beschichtungsmittelzusammensetzung, der hydroxylgruppen-haltigen Komponente (C),
0,5 bis 5,0 Gew.-%, bezogen auf den Bindemittelgehalt der Beschichtungsmittelzusammensetzung, mindestens einer aromatischen Carbonsäure (S),
0 bis 15 Gew.-%, bezogen auf den Bindemittelgehalt der Beschichtungsmittelzusammensetzung, eines oder mehrerer Aminoplastharze und/oder eines oder mehrerer Tris(Alkoxycarbonylamino)Triazine (E),
0 bis 20 Gew.-%, bezogen auf den Bindemittelgehalt der Beschichtungsmittelzusammensetzung, mindestens eines üblichen und bekannten Lackadditivs (F)
und
mindestens einen Zink-Amidin-Komplex (D) in einer solchen Menge enthalten, dass der Metallgehalt des Zink-Amidin-Komplexes, jeweils bezogen auf den Bindemittelgehalt der Beschichtungsmittelzusammensetzung, zwischen 100 und 1000 ppm liegt.

In einer weiteren Ausführungsform der Erfindung kann die erfindungsgemäße Bindemittelmischung bzw. die erfindungsgemäße Beschichtungsmittelzusammensetzung noch weitere Pigmente und/oder Füllstoffe enthalten und zur Herstellung pigmentierter Topcoats bzw. pigmentierter Undercoats oder Füller, insbesondere pigmentierter Topcoats, dienen. Die dafür eingesetzten Pigmente und/oder Füllstoffe sind dem Fachmann bekannt. Die Pigmente werden üblicherweise in einer solchen Menge eingesetzt, dass das Pigment-zu-Bindemittel-Verhältnis zwischen 0,05 : 1 und 1,5 : 1 liegt, jeweils bezogen auf den Bindemittelgehalt der Beschichtungsmittelzusammensetzung.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die Applikation der erfindungsgemäßen Beschichtungsmittelzusammensetzungen kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C während einer Zeit von 1 min bis zu 10 h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80°C, insbesondere zwischen 20 und 60°C liegen.

Die erfindungsgemäßen Beschichtungsmittelzusammensetzungen eignen sich hervorragend als dekorative, schützende und/oder effektgebende, Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäßen Beschichtungsmittelzusammensetzungen können daher beispielsweise auf ein ggf. vorbeschichtetes Substrat aufgebracht werden, wobei die erfindungsgemäßen Beschichtungsmittel sowohl pigmentiert als auch unpigmentiert sein können. Insbesondere werden die erfindungsgemäßen Beschichtungsmittelzusammensetzungen und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., sowie der Automobilreparaturlackierung und der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon eingesetzt.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittelzusammensetzungen in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit der erfindungsgemäßen Beschichtungsmittelzusammensetzung aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus der erfindungsgemäßen Beschichtungsmittelzusammensetzung hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die erfindungsgemäße Beschichtungsmittelzusammensetzung aufgebracht. Anschließend wird die Zweischichtlackierung bevorzugt unter bei der Automobilserienlackierung angewandten Bedingungen bei Temperaturen von 20 bis 200°C während einer Zeit von 1 min bis zu 10 h eingebrannt, wobei bei den für die Automobilreparaturlackierung angewandten Temperaturen, die im Allgemeinen zwischen 20 und 80°C, insbesondere zwischen 20 und 60°C liegen, auch längere Härtungszeiten zur Anwendung kommen können.

In einer weiteren bevorzugten Ausführungsform der Erfindung wird die erfindungsgemäße Beschichtungsmittelzusammensetzung als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit der erfindungsgemäßen Beschichtungsmittelzusammensetzung aufgetragen werden.

### Beispiele

### Gelpermeationschromatographie (GPC)

Die Gelpermeationschromatographie wurde bei 40°C mit einer Hochdruckflüssigkeitschromatographie-Pumpe und einem Brechungsindexdetektor durchgeführt. Als Elutionsmittel wurde Tetrahydrofuran mit einer Elutionsgeschwindigkeit von 1 ml/min verwendet. Die Kalibrierung wurde mittels Polystyrol-Standards durchgeführt. Das zahlenmittlere Molekulargewicht Mn, das gewichtsmittlere Molekulargewicht Mw und Mp wurden bestimmt, wobei sich der Polymolekularitätsindex Mp berechnet aus Mp = Mw/Mn.

### Hydroxylzahl

Die Hydroxylzahl wird über den eingesetzten Anteil an OH-funktionellen Komponenten berechnet und in mg KOH pro Gramm Festharz angegeben.

### Festkörperbestimmung

Ca. 1 g Probe werden in einem Weißblechdeckel eingewogen. Nach Zugabe von ca. 3 ml Butylacetat wird die Probe im Trockenschrank für 60 Minuten bei 130°C getrocknet, im Exsikkator abgekühlt, und dann zurückgewogen. Der Rückstand entspricht dem Festkörperanteil.

### Bindemittelgehaltbestimmung

Unter Bindemittelanteil ist jeweils der in Tetrahydrofuran (THF) lösliche Anteil der Beschichtungsmittelzusammensetzung vor der Vernetzung zu verstehen. Dazu wird eine kleine Probe (P) gewogen, in der 50- bis 100-fachen Menge THF gelöst, unlösliche Bestandteile werden abfiltriert, das THF abgedampft und daran anschließend der Festkörper der zuvor in THF gelösten Bestandteile bestimmt, indem für 60 Minuten bei 130°C getrocknet wird, im Exsikkator abgekühlt wird und dann erneut gewogen wird. Der Rückstand entspricht dem Bindemittelgehalt der Probe (P).

### Klebfreiheit mittels Zapon-Tack Test (ZTT):

Ein Aluminiumstreifen mit einer Dicke von ca. 0,5 mm, einer Breite von 2,5 cm und einer Länge von ca. 11 cm wird so in einem 110° Winkel gebogen, dass eine Fläche von 2,5 X 2,5 cm entsteht. Die lange Seite des Bleches wird nach weiteren 2,5 cm um ca. 15° so gebogen, dass das Blech durch ein auf der quadratischen Fläche zentriert platziertes Gewicht von 5 g gerade in Balance gehalten wird. Zur Messung der Klebfreiheit nach ZTT wird das gebogene Blech auf dem Lackfilm platziert und für 30 s mit einem Gewicht von 100g beschwert. Nach Entfernung des Gewichtes wird der Lack als klebfrei angesehen, wenn der Blechwinkel innerhalb von 5 s umfällt. Der Test wird in Abständen von 15 Minuten wiederholt. Vor Einsatz des Tests wird die Klebrigkeit des Lackfilms qualitativ durch Berührung beurteilt. Bei Prüfungen mit erhöhter Temperatur werden die Prüftafeln vor Beginn der Prüfung zur Abkühlung 10 Minuten bei Raumtemperatur gelagert. Die Messung der Klebfreiheit mit dem Zapon-Tack Test erfolgte nach Härtung der Beschichtung 30 min bei 60°C und Beginn der Prüfung nach Lagerung der Tafeln für 10 Minuten bei Raumtemperatur sowie die Messung der Klebfreiheit mit dem Zapon-Tack Test bei Aufbewahrung der Beschichtung bei Raumtemperatur.

### Print-Test:

Der Lackfilm wird mittels 100µm-Rakel auf eine Glastafel aufgezogen. Nach Trocknung für 15 Minuten bei 60°C oder Trocknung für 30 min 60°C wird innerhalb von 10 Minuten nach Entnahme aus dem Ofen die Glastafel auf eine handelsüblichen Laborwaage aufgelegt. Mittels Daumendruck wird der Film dann für 20 s mit einem Gewicht von 2 kg belastet. Diese Prüfung wird alle 10 Minuten wiederholt. Bei offensichtlich noch weichem oder klebrigem Lackfilm wird zunächst abgewartet, bis der Lackfilm eine ausreichende Klebfreiheit und Härte erreicht hat. Die Auswertung der Versuche wird nach einer Lagerzeit von 24 Stunden vorgenommen. Dazu wird die Lackoberfläche mit einer wässrigen Tensidlösung (handelsübliches Spülmittel) und einem weichen Tuch abgewaschen um Fettmarkierungen zu eliminieren. Es wird immer gegen einen Standard gemessen. Der Lack wird als in Ordnung angesehen, wenn kein Daumenabdruck auf dem Lackfilm sichtbar ist. Diese Prüfung ist ein Maß für die Montagefestigkeit von Reparaturlackierungen, d.h. je früher der Lackfilm seine Montagefestigkeit nach forcierter Trocknung erreicht hat, um so eher kann mit Montagearbeiten (bzw. Demontagearbeiten von Abklebungen) an der reparierten Karosserie begonnen werden.

Angegeben ist jeweils die Zeit in Minuten, nach der der Abdruck im Print Test nach Trocknung für 15 min 60°C oder Trocknung für 30 min 60°C und anschließender Lagerung der Tafeln für 10 Minuten bei Raumtemperatur nicht mehr sichtbar ist.

### Drying recorder:

Auf Glastafeln der Dimension 280 mm x 25 mm wird der Lack mit Hilfe eines 100 µm Kastenrakels aufgezogen. Mit Hilfe des Byk-Dry-time Recorders werden bei Raumtemperatur (20 - 23°C) und einer relativen Luftfeuchte von 40 bis 60% Nadeln mit einer definierten Geschwindigkeit über den Film gezogen. Dabei werden 3 verschiedene Phasen sowie die Gesamtlänge (= Summe aus Phase1 + Phase 2 + Phase 3) der Spur beurteilt.
Phase 1: Die Nadelspur läuft wieder zu
Phase 2: Die Nadelspur führt zu eine tiefgehenden Furche im Lackfilm
Phase 3: Die Nadel verletzt den Film nur oberflächlich

Die Beurteilung wird immer gegen einen Standard vorgenommen.

Angegeben ist jeweils die Gesamtlänge der Kratzspur in cm sowie die Länge der Kratzspur in cm jeweils nach Phase 1, 2 und 3.

### Potlife:

Dazu wird die Viskosität bei Raumtemperatur einer Lackprobe im DIN4 Auslaufbecher gemessen. Zuvor wird die Probe auf eine Auslaufviskosität von 19 - 20 Sekunden im DIN4 Becher eingestellt. Danach wird in geeigneten Zeitabständen der Viskositätsanstieg bestimmt. Sobald die Probe ihre Anfangsviskosität verdoppelt hat, ist das Potlife-Limit erreicht. Angegeben ist jeweils die im DIN4 Auslaufbecher bei Raumtemperatur gemessene Viskosität der Beschichtungsmittelzusammensetzung direkt nach dessen Herstellung sowie nach einer, zwei, drei und vier Stunden nach dessen Herstellung.

### Pendelhärte:

Die Härte der Lackfilme wird mittels Pendeldämpfung nach Koenig gemäß DIN 53157 bestimmt. Angegeben sind die Pendelschläge. Die Messung der Pendelhärte erfolgte nach Lagerung der Beschichtung 1 bzw. 3 bzw. 7 Tage bei Raumtemperatur und Messung der Pendelhärte nach Härtung der Beschichtung für 30 min bei 60°C und anschließende Lagerung der Beschichtung 1 bzw. 3 bzw. 7 Tage bei Raumtemperatur.

### Stammlack:

86,4g eines styrolhaltigen Polyacrylates (62%ig in Solventnaphta®/Ethoxyethylpropionat/Methylisobutylketon (20/46/34)) mit einem Molekulargewicht von 1600 - 2200 (Mn) und 4000 - 5000 (Mw), einer gemessenen Säurezahl von 12-16 mg KOH/g, einer berechneten OH-Zahl (OHZ) von ca. 130 mg KOH/g (Festharz) und einer Viskosität der 60%igen Lösung in Butylacetat von 200 - 400 mPa.s, gemessen mit einem Rotationsviskosimeter (Brookfield CAP 2000, Spindel 3, 1000RPM), werden mit 6,4 g Methylisobutylketon, 2,2 g eines handelsüblichen Lichtschutzmittelgemisches bestehend aus UV- und HALS Lichtschutzmittel sowie 0,15 g eines handelsüblichen Verlaufsmittels auf Basis eines Polyacrylates zu einer homogenen Mischung verrührt. Zu dieser Mischung wird, sofern angegeben, der entsprechende Katalysator unter Rühren zugemischt. Bei Einsatz von Benzoesäure wird diese unter Rühren als Feststoff im Stammlackgemisch aufgelöst. Zur Viskositätseinstellung werden nochmals 1,0 Teile Methylsobutylketon und 2,80 Teile Butylacetat zugesetzt.

### Härterlösung:

Gemäß der WO 2009/077180 wird nach folgender Rezeptur ein Härter mit einem Umsetzungsgrad der NCO-Gruppen von ca. 32% - 35% hergestellt:
In einem 250 ml Dreihalskolben mit Rührmagnet, Innenthermometer und Tropftrichter wird eine Mischung aus 51,6 g eines trimerisierten Isocyanurates auf Basis Hexamethyl-1,6-diisocyanat (FK 100%) [Desmodur® N 3600, Firma Bayer, Leverkusen], 13,6 g Butylacetat und 2,4 g Triethylorthoformiat vorgelegt. Unter Stickstoffüberschleierung wird über den Tropftrichter eine Mischung aus 26,4 g Bis -[3 trimethoxysilyl- propyl] amin (Dynasylan® 1124, EVONIK, Rheinfelden) und 2,0 g N-[3-(trimethoxysilyl)-propyl]-butylamin (Dynasylan® 1189, Firma EVONIK, Rheinfelden) langsam zugetropft. Die Reaktion ist exotherm. Die Zulaufgeschwindigkeit wird so gewählt, dass die Innentemperatur einen Maximalwert von 60°C nicht übersteigt. Über den Tropftrichter werden danach weitere 4 g Butylacetat zugegeben. Es wird für weitere vier Stunden bei 60°C gehalten, bis die titrimetische Bestimmung des Isocyanatgehaltes (nach DIN EN ISO 11909) einen konstanten Wert 8,3 - 8,8% NCO, bezogen auf Festsubstanz) ergibt.

Das molare Verhältnis von Dynasylan® 1124 zu Dynasylan® 1189 ist 10:1.

### Herstellung der erfindungsgemäßen Katalysatoren

Zink-2-ethylhexanoat wird in der angegebenen Menge Butylacetat vorgelegt. 1,1,3,3 Tetramethylguanidin wird dann langsam zugetropft. Nach Abklingen der exothermen Reaktion wird dann noch weitere 20 Minuten bei Raumtemperatur gerührt.

| | **Katalysator K1** | **Katalysator K2** | **Katalysator K3** | **Katalysator K4** |
|---|---|---|---|---|
| Zink(II)-bis(2ethylhexanoat) | 60,27g (0,171mol) | 48,34g (0,137 mol) | 40,36 g (0,115 mol) | 34,64 g (0,1 mol) |
| 1,1,3,3 Tetramethylguanidin | 19,73g (0,171 mol) | 31,656g (0,275 mol) | 39,64 g (0,344 mol) | 45,36 g (0,4 mol) |
| Butylacetat | 20g | 20g | 20g | 20g |

### Vergleichskatalysator (VK1):

Gemäß der WO 2009/077180 wurde ein Katalysator auf DABCO-Basis folgendermaßen hergestellt:
Position 1: 11,78g (0,105 mol 1,4-Diazabicyclo(2.2.2)octan
Position 2: 32,24 (0,100mol) Bis(2-ethylhexyl)-phosphat
Position 3: 10,00 g Methylisobutylketon
Position 4: 20,00 g Ethylacetat

In einem 100 ml Dreihalskolben, ausgerüstet mit Rücklaufkühler und Rührer werden Positionen 1,3 und 4 unter Stickstoffüberschleierung vorgelegt. Bei ca. 45°C wird Position 4 langsam zugetropft, dabei wird die Temperatur bei max. 50°C gehalten. Nach weiterem Rühren für 3 Stunden bei 40°C wird die Lösemittelmischung am Rotationsverdampfer entfernt. Der Rückstand wird dann mit Isopropanol aufgenommen. Man erhält eine 50%ige Lösung des Katalysators VK1.

Zu dieser Mischung wird der entsprechende Katalysator unter Rühren zugemischt. Bei Einsatz von Benzoesäure wird diese unter Rühren als Feststoff zuvor im Stammlackgemisch aufgelöst. Zur Viskositätseinstellung werden nochmals 1,0 Teile Methylisobutylketon und 2,80 Teile Butylacetat zugesetzt.

### Versuchsdurchführung:

Zusätzliche Komponenten wie Benzoesäure und Katalysatorlösungen werden im Stammlack aufgelöst. Nach leichtem Rühren erhält man klare Lösungen. Zur Versuchsdurchführung wird der Stammlack vorgelegt und der Härter zugegeben. Die Lösung wird durch Rühren homogenisiert.

Für die Viskositätsmessungen wird auf die angegebene Viskosität durch Zugabe einer Mischung aus Methylisobutylketon/Butylacetat im Verhältnis 1:3 eingestellt. Für die Glasaufzüge verzichtet man auf die Einstellung der Viskosität.

Zur Trocknungsprüfung wird der Lackfilm auf Glastafeln mittels eines 100 µm Kastenrakels aufgezogen, so dass eine Filmschichtdicke von 30 - 35 µm erreicht wird. Für die Prüfung der Pendelhärte wird der Film auf Glastafeln aufgegossen, vor Bestimmung der Filmhärte nach Koenig wird die Schichtdicke des aufgezogenen Films am Ritz (DIN 50933) bestimmt. Für die Prüfungen mittels Drying Recorder werden die Proben ebenfalls mit einem 100 µm Kastenrakel auf geeignete Glasstreifen von ca 300 mm Länge und ca. 25 mm Breite aufgezogen; die damit erreichten Schichtdicken liegen bei 30 - 35 µm.

### Vergleichsbeispiele V1 und V2

Zunächst wurden die Beschichtungsmittel der Vergleichsbeispiele V1 und V2 mit jeweils gleicher Menge Phosphor-basiertem Katalysator gemäß WO09/077180, aber im Vergleichsbeispiel V1 mit Benzoesäure und im Vergleichsbeispiel V2 ohne Benzoesäure hergestellt. Die Zusammensetzung dieser Beschichtungsmittel der Vergleichsbeispiele V1 und V2 sowie die Prüfergebnisse der resultierenden Beschichtungen sind in Tabelle 1 dargestellt.

**Tabelle 1: Zusammensetzung der Beschichtungsmittel der Vergleichsbeispiele V1 und V2 in Gewichtsteilen sowie die Prüfergebnisse der resultierenden Beschichtungen**

| | V1 | V2 |
|---|---|---|
| Stammlack | 50 | 50 |
| Benzoesäure | 0,84 | |
| Katalysator VK1 | 0,14 | 0,14 |
| Silanisierter Härter | 33,8 | 33,8 |
| | | |

| **Pendeldämpfung** | | |
|---|---|---|
| | | |
| 1 Tag RT | 34 | 7 |
| 1 Tag 15' 60°C | 20 | 8 |
| 1 Tag 30' 60°C | 47 | 10 |
| 3 Tage RT | 113 | 51 |
| 3 Tage 15' 60°C | 111 | 53 |
| 3 Tage 30' 60°C | 109 | 53 |
| 7 Tage RT | 134 | 86 |
| 7 Tage 30' 60°C | 118 | 88 |
| | | |
| **Print- Test** 15min 60°C | 320 | >360 |
| **Print- Test** 30min 60°C | 40 | >360 |

### Beispiele 1 und 2 sowie Vergleichsbeispiele V3 und V4

Zunächst wurden die Beschichtungsmittel der Beispiele 1 und 2 mit jeweils gleicher Menge Zink-Amidin-Komplex, aber unterschiedlichem erfindungsgemäßen Katalysator K1 im Beispiel 1 und K2 im Beispiel 2 hergestellt. Außerdem wurden die Beschichtungsmittelzusammensetzungen der Vergleichsbeispiele V3 und V4 hergestellt, die sich von den erfindungsgemäßen Beispielen B1 und B2 nur dadurch unterscheiden, dass sie keine Benzoesäure enthalten. Die Zusammensetzung dieser Beschichtungsmittel der Beispiele 1 und 2 und der Vergleichsbeispiele V3 und V4 sowie die Prüfergebnisse der resultierenden Beschichtungen sind in Tabelle 2 dargestellt.

**Tabelle 2: Zusammensetzung der Beschichtungsmittel der Beispiele 1 und 2 und der Vergleichsbeispiele V3 und V4 in Gewichtsteilen sowie die Prüfergebnisse der resultierenden Beschichtungen**

| **Rezeptur** | B1 | V3 | B2 | V4 |
|---|---|---|---|---|
| Stammlack | 50 | 50 | 50 | 50 |
| Benzoesäure | 1,36 | | 1,36 | |
| Katalysator K1 | 0,101 | 0,101 | | |
| Katalysator K2 | | | 0,126 | 0,126 |
| Silanisierter Härter | 33,8 | 33,8 | 33,8 | 33,8 |
| Metallgehalt ¹⁾ [ppm] | 158 | 162 | 257 | 263 |
| | | | | |

| **Ergebnisse:** | | | | |
|---|---|---|---|---|
| **Potlife** DIN 4 (s) | | | | |
| direkt | 20 | 20 | 20 | 20 |
| nach 1h | 23 | 21 | 22 | 21 |
| nach 2h | 30 | 23 | 26 | 24 |
| nach 3h | n.m. | 29 | n.m. | 28 |
| nach 4h | | 33 | | 33 |

| **ZAPON-Tack** | | | | |
|---|---|---|---|---|
| 30min 60°C [min] | 0 | 270 | 0 | 180 |
| RT [min] | 2 h | >360 | 15 min | >360 |

| **Pendeldämpfung** | | | | |
|---|---|---|---|---|
| 1 Tag RT | 79 | 27 | 88 | 30 |
| 1 Tag nach Trocknung 30'/60°C | 110 | 37 | 103 | 41 |
| 3 Tag RT | 85 | 67 | 112 | 62 |
| 3 Tag nach Trocknung 30'/60°C | 132 | 68 | 130 | 79 |
| 7 Tag RT | 92 | 76 | 120 | 80 |
| 7 Tag nach Trocknung 30'/60°C | 142 | 83 | 139 | 92 |

| **Drying Recorder** | | | | |
|---|---|---|---|---|
| Gesamtlänge Kratzspur | 18,3 | 20,7 | 16,1 | 23 |
| Phase 1 | 4 | 7 | 5,1 | 9 |
| Phase 2 | 13,8 | 12 | 8,6 | 10,7 |
| Phase 3 | 2,8 | 3,1 | 2,8 | 4,6 |
| **Print- Test** 15min 60°C [min] | 200 | > 360 | 40 | > 360 |

| | | | | |
|---|---|---|---|---|
| ¹⁾ angegeben ist die Katalysatormenge K1 bzw. K2 in ppm Metallgehalt, bezogen auf den Bindemittelanteil der Beschichtungsmittelzusammensetzung | | | | |

### Beispiele 3 bis 5

Es wurden die Beschichtungsmittel der Beispiele 3 bis 5 mit jeweils gleicher Menge Zink-Amidin-Komplex, aber unterschiedlichen Mengen Benzoesäure hergestellt. Die Zusammensetzung dieser Beschichtungsmittel der Beispiele 3 bis 5 sowie die Prüfergebnisse der resultierenden Beschichtungen sind in Tabelle 3 dargestellt.

**Tabelle 3: Zusammensetzung der Beschichtungsmittel der Beispiele 3 bis 5 in Gewichtsteilen sowie die Prüfergebnisse der resultierenden Beschichtungen**

| | B3 | B4 | B5 |
|---|---|---|---|
| Stammlack | 50 | 50 | 50 |
| Benzoesäure | 0,419 | 0,838 | 1,257 |
| Katalysator K2 | 0,106 | 0,106 | 0,106 |
| Silanisierter Härter | 33,8 | 33,8 | 33,8 |
| Metallgehalt 1) [ppm] | 220 | 220 | 220 |
| | | | |

| **Ergebnisse:** | | | |
|---|---|---|---|
| **Potlife** DIN 4 (s) | | | |
| direkt | 31 | 29 | 30 |
| nach 1h | 43 | 36 | 34 |
| nach 2h | 60 | 48 | 45 |
| nach 3h | n.m. | n.m. | 65 |
| nach 4h | | | n.m. |
| ZAPON-Tack | | | |
| 30min 60°C [min] | 90 | 45 | 15 |
| RT [min] | 210 | 165 | 240 |

| **Pendeldämpfung** | | | |
|---|---|---|---|
| 1 Tag RT | 59 | 69 | 75 |
| 1 Tag nach Trocknung 30'/60°C | 104 | 89 | 115 |
| 3 Tag RT | 74 | 100 | 93 |
| 3 Tag nach Trocknung 30'/60°C | 117 | 111 | 126 |
| 7 Tag RT | 121 | 120 | 111 |
| 7 Tag nach Trocknung 30'/60°C | 140 | 142 | 142 |

| **Drying Recorder** | | | |
|---|---|---|---|
| Gesamtlänge Kratzspur | 15,9 | 14,8 | 16,7 |
| Phase 1 | 4,9 | 3,5 | 4,8 |
| Phase 2 | 7,5 | 6,9 | 7,4 |
| Phase 3 | 4 | 2,1 | 3,8 |
| **Print- Test** 15min 60°C [min] | 220 | 180 | 20 |

| | | | |
|---|---|---|---|
| ¹⁾ angegeben ist die Katalysatormenge K2 in ppm Metallgehalt, bezogen auf den Bindemittelanteil der Beschichtungsmittelzusammensetzung | | | |

### Beispiele 6 und 7 sowie Vergleichsbeispiele V5 und V6

Zunächst wurden die Beschichtungsmittel der Beispiele 6 und 7 mit jeweils gleicher Menge Zink-Amidin-Komplex, aber unterschiedlichem erfindungsgemäßen Katalysator K3 im Beispiel 6 und K4 im Beispiel 7 hergestellt. Außerdem wurden die Beschichtungsmittelzusammensetzungen der Vergleichsbeispiele V5 und V6 hergestellt, die sich von den erfindungsgemäßen Beispielen B6 und B7 nur dadurch unterscheiden, dass sie keine Benzoesäure enthalten. Die Zusammensetzung dieser Beschichtungsmittel der Beispiele 6 und 7 und der Vergleichsbeispiele V5 und V6 sowie die Prüfergebnisse der resultierenden Beschichtungen sind in Tabelle 4 dargestellt.

**Tabelle 4: Zusammensetzung der Beschichtungsmittel der Beispiele 6 und 7 und der Vergleichsbeispiele V5 und V6 in Gewichtsteilen sowie die Prüfergebnisse der resultierenden Beschichtungen**

| | B6 | B7 | V5 | V6 |
|---|---|---|---|---|
| Stammlack | 50 | 50 | 50 | 50 |
| Benzoesäure | 1,36 | 1,36 | | |
| Katalysator K3 | 0,152 | | 0,152 | |
| Katalysator K4 | | 0,177 | | 0,177 |
| Silanisierter Härter | 33,8 | 33,8 | 33,8 | 33,8 |
| Metallgehalt 1) [ppm] | 200 | 206 | 200 | 206 |
| | | | | |
| **Ergebnisse:** | | | | |
| **Potlife** DIN 4 (s) | | | | |
| direkt | 26 | 27 | 24 | 25 |
| nach 1h | 31 | 34 | 30 | 31 |
| nach 2h | 39 | 40 | 35 | 39 |
| nach 3h | 56 | 67 | 50 | 54 |
| nach 4h | --- | --- | --- | --- |
| **ZAPON-Tack** | | | | |
| 30min 60°C [min] | 15 | 45 | >360 | >360 |
| RT [min] | 210 | 225 | >360 | >360 |
| **Pendeldämpfung** | | | | |
| 1 Tag RT | 85 | 79 | 66 | 53 |
| 1 Tag nach Trocknung 30'/60°C | 130 | 115 | 89 | 94 |
| 3 Tage RT | 100 | 95 | 87 | 103 |
| 3 Tage nach Trocknung 30'/60°C | 120 | 113 | 122 | 115 |
| 7 Tage RT | 121 | 113 | 123 | 114 |
| 7 Tage nach Trocknung 30'/60°C | 139 | 117 | 137 | 122 |

| **Drying Recorder** | | | | |
|---|---|---|---|---|
| Gesamtlänge Kratzspur | 11 | 20 | 13 | 12,5 |
| Phase 1 | 4,2 | 5 | 5 | 4,3 |
| Phase 2 | 4,1 | 4,6 | 2,7 | 2,5 |
| Phase 3 | 9,5 | 9,2 | 5 | 5,5 |
| **Print- Test** 15min 60°C [min] | 0 | 20 | >360 | >360 |

| | | | | |
|---|---|---|---|---|
| ¹⁾ angegeben ist die Katalysatormenge K3 bzw. K4 in ppm Metallgehalt, bezogen auf den Bindemittelanteil der Beschichtungsmittelzusammensetzung | | | | |

### Diskussion der Prüfergebnisse

Die Prüfergebnisse zeigen, dass Komplexe des Zinks mit Amidinen die Vernetzung von OH-Acrylaten mit den genannten Hybridhärtern wirkungsvoll beschleunigen. Besonders wirkungsvoll sind diese Zink-Amidin-Komplexe in Kombination mit Carbonsäuren, deren Carboxylgruppe in Konjugation zu einem π-Elektronensystem steht, wie z.B Benzoesäure.

## Patentansprüche

1. Nichtwässrige Beschichtungsmittelzusammensetzung enthaltend
(A) mindestens eine Polyhydroxylgruppen-haltige Verbindung (A),
(B) mindestens eine Polyisocyanatgruppen-haltige Verbindung (B) mit freien oder blockierten Isocyanatgruppen
und
(D)mindestens einen Katalysator (D) auf Basis eines Zink-Amidin-Komplexes, der herstellbar ist durch Umsetzung eines oder mehrer Zink(II)biscarboxylate mit einem Amidin der Formel (I) oder mit einer Mischung aus zwei oder mehreren Amidinen der Formel (I) 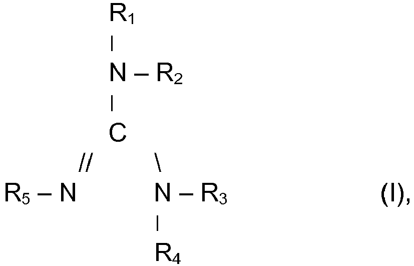
wobei R₅ = Wasserstoff und R₁, R₂, R₃, und R₄ jeweils gleiche oder verschiedene Reste sind, wobei R₁ und R₃ Wasserstoff oder ein Alkylrest oder ein Arylrest und R₂ und R₄ ein Alkylrest oder ein Arylrest sind,
**dadurch gekennzeichnet, dass**
die Komponente (B) mindestens eine Struktureinheit der Formel (II)
-NR-(X-SiR"x(OR')3-x) (II),
und/oder mindestens eine Struktureinheit der Formel (III)
-N(X-SiR"x(OR')3-x)n(X'-SiR"y(OR')3-y)m (III),
mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
bevorzugt R' = Ethyl und/oder Methyl,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
bevorzugt R" = Alkylrest, insbesondere mit 1 bis 6 C-Atomen,
n = 0 bis 2, m = 0 bis 2, m+n = 2 sowie x, y = 0 bis 2 ist,
aufweist und dass die Beschichtungsmittelzusammensetzung
(S) mindestens eine monomere aromatische, ggf. substituierte Carbonsäure (S), deren Carboxylgruppe in Konjugation zu einem π-Elektronensystem steht,
enthält.

2. Beschichtungsmittelzusammensetzung nach Anspruch 1, **dadurch gekennzeichnet, dass** die Reste R₂ und R₄ gleiche oder verschiedene acyclische, geradkettige oder verzweigte Alkylreste und/oder gleiche oder verschiedene Arylreste sowie die Reste R₁ und R₃ Wasserstoff oder gleiche oder verschiedene acyclische, geradkettige oder verzweigte Alkylreste und/oder gleiche oder verschiedene Arylreste sind, bevorzugt dass die Reste R₁, R₂, R₃, und R₄ acyclische aliphatische Alkylreste, besonders bevorzugt acyclische aliphatische Alkylreste mit eins bis vier Kohlenstoffatomen sowie ganz besonders bevorzugt Methylreste sind.

3. Beschichtungsmittelzusammensetzung nach Anspruch 1 oder 2, **dadurch gekennzeichnet, dass** der Zink-Amidin-Komplex herstellbar ist durch Umsetzung von 1,0 Molen eines oder mehrerer Zink(II)biscarboxylate mit mindestens 0,1 Molen, bevorzugt mit 1,0 bis 4,0 Molen, besonders bevorzugt mit 1,5 bis 3,0 und ganz besonders bevorzugt mit 2,0 bis 3,0 Molen, eines oder mehrerer Amidine der Formel (I).

4. Beschichtungsmittelzusammensetzung nach einem der Ansprüche 1 bis 3, **dadurch gekennzeichnet, dass** der Carboxylat-Rest des Zink-Amidin-Komplexes (D) ausgewählt ist aus der Gruppe der Carboxylat-Reste von aliphatischen linearen und/oder verzweigten, ggf. substituierten Monocarbonsäuren mit 1 bis 12 C-Atomen im Alkylrest und/oder von aromatischen, ggf. substituierten Monocarbonsäuren mit 6 bis 12 C-Atomen im Arylrest.

5. Beschichtungsmittelzusammensetzung nach einem der Ansprüche 1 bis 4, **dadurch gekennzeichnet, dass** die Beschichtungsmittelzusammensetzung mindestens einen Zink-Amidin-Komplex (D) in einer solchen Menge enthält, dass der Metallgehalt des Zink-Amidin-Komplexes, jeweils bezogen auf den Bindemittelanteil der Beschichtungsmittelzusammensetzung, zwischen 35 und 2000 ppm, bevorzugt zwischen 35 und 1000 ppm und besonders bevorzugt zwischen 100 und 1000 ppm, liegt und/oder die Beschichtungsmittelzusammensetzung 0,2 bis 15,0 Gew.-%, bevorzugt 0,5 bis 8,0 Gew.-% und besonders bevorzugt 0,5 bis 5,0 Gew.-%, mindestens einer aromatischen Carbonsäure (S) enthält, wobei die Gew.-%-Angaben wiederum jeweils bezogen sind auf den Bindemittelanteil der Beschichtungsmittelzusammensetzung.

6. Beschichtungsmittelzusammensetzung nach einem der Ansprüche 1 bis 5, **dadurch gekennzeichnet, dass** zwischen 10 und 90 mol-%, bevorzugt zwischen 20 und 80 mol-%, besonders bevorzugt mehr als 30 und weniger als 70 mol-% und ganz besonders bevorzugt zwischen 31 und 50 mol-%, der ursprünglich in der Komponente (B) vorhandenen Isocyanatgruppen zu Struktureinheiten (II) und/oder (III) umgesetzt worden sind.

7. Beschichtungsmittelzusammensetzung nach einem der Ansprüche 1 bis 6, **dadurch gekennzeichnet, dass** der Gesamtgehalt an Struktureinheiten (II) in der Komponente (B) zwischen 5 und 70 mol-%, bevorzugt zwischen 8 und 50 mol-%, besonders bevorzugt zwischen 9 und 40 mol-% jeweils bezogen auf die Gesamtheit der Struktureinheiten (II) plus (III), und der Gesamtgehalt an Struktureinheiten (III) in der Komponente (B) zwischen 95 und 30 mol-%, bevorzugt zwischen 92 und 50 mol-% und besonders bevorzugt zwischen 91 und 60 mol-%, jeweils bezogen auf die Gesamtheit der Struktureinheiten (II) plus (III), liegt.

8. Beschichtungsmittelzusammensetzung nach einem der Ansprüche 1 bis 7, **dadurch gekennzeichnet, dass** der Polyisocyanatgrundkörper der Komponente (B) 1,6-Hexamethylendiisocyanat, Isophorondiisocyanat und/oder 4,4'-Methylendicyclohexyldiisocyanat und/oder deren Isocyanurat- Trimeres und/oder deren Allophanat- Dimeres und/oder deren Biuret- Dimeres und/oder deren Uretdion-Dimeres ist.

9. Beschichtungsmittelzusammensetzung nach einem der Ansprüche 1 bis 8, **dadurch gekennzeichnet, dass** die Komponente (B) dadurch hergestellt worden ist, dass die Polyisocyanate und/oder deren Isocyanurat- Trimere und/oder deren Allophanat- Dimere und/oder deren Biuret- Dimere und/oder deren Uretdion-Dimere mit mindestens einer Verbindung der Formel (IIa)
H-NR-(X-SiR"x(OR')3-x) (IIa)
und/oder mit mindestens einer Verbindung der Formel (IIIa)
HN(X-SiR"x(OR')3-x)n(X'-SiR"y(OR')3-y)m (lila),
umgesetzt worden sind, wobei die Substituenten die in Anspruch 1 genannte Bedeutung haben.

10. Beschichtungsmittelzusammensetzung nach einem der Ansprüche 1 bis 9, **dadurch gekennzeichnet, dass** in der Komponente (B) der Gesamtgehalt an Struktureinheiten (II) zwischen 9 und 40 mol-% und der Gesamtgehalt an Struktureinheiten (III) zwischen 91 und 60 mol-%, jeweils bezogen auf die Gesamtheit der Struktureinheiten (II) plus (III), liegt
und
zwischen 31 und 50 mol-%, der ursprünglich in der Komponente (B) vorhandenen Isocyanatgruppen zu Struktureinheiten (II) und (III) umgesetzt worden sind und
in der Komponente (B) zwischen 26 und 35 mol-% der ursprünglich vorhandenen Isocyanatgruppen zu Struktureinheiten (III) umgesetzt worden sind.

11. Beschichtungsmittelzusammensetzung nach einem der Ansprüche 1 bis 10, **dadurch gekennzeichnet, dass** die Beschichtungsmittelzusammensetzung von 20 bis 80 Gew.-%, bevorzugt von 30 bis 70 Gew.-%, jeweils bezogen auf den Bindemittelanteil des Beschichtungsmittel, mindestens eines hydroxylgruppen-haltigen Polyacrylates (A) und/oder mindestens eines hydroxylgruppenhaltigen Polymethacrylates (A) und/oder die Beschichtungsmittelzusammensetzung von 5 bis 79 Gew.-%, bevorzugt von 25 bis 69 Gew.-%, jeweils bezogen auf den Bindemittelgehalt der Beschichtungsmittelzusammensetzung, der Polyisocyanatgruppen-haltigen Verbindung (B) enthält.

12. Mehrstufiges Beschichtungsverfahren, **dadurch gekennzeichnet, dass** auf ein gegebenenfalls vorbeschichtetes Substrat eine pigmentierte Basislackschicht und danach eine Schicht aus der Beschichtungsmittelzusammensetzung nach einem der Ansprüche 1 bis 11 aufgebracht wird.

13. Mehrstufiges Beschichtungsverfahren nach Anspruch 12, **dadurch gekennzeichnet, dass** nach Auftrag der pigmentierten Basislackschicht der aufgebrachte Basislack zunächst bei Temperaturen von Raumtemperatur bis 80°C getrocknet wird und nach dem Auftrag der Beschichtungsmittelzusammensetzung nach einem der Ansprüche 1 bis 11 bei Temperaturen zwischen 20 und 80°C, insbesondere zwischen 20 und 60°C, gehärtet wird.

14. Verwendung der Beschichtungsmittelzusammensetzung nach einem der Ansprüche 1 bis 11 als Klarlack beziehungsweise Verwendung des Verfahrens nach Anspruch 12 oder 13 für die Automobilserienlackierung, die Lackierung von Automobil-Anbauteilen und/oder Nutzfahrzeugen und für die Autoreparaturlackierung.

15. Effekt- und/oder farbgebende mehrschichtige Lackierung aus mindestens einer pigmentierten Basislackschicht und mindestens einer darauf angeordneten Klarlackschicht, **dadurch gekennzeichnet, dass** die Klarlackschicht aus einer Beschichtungsmittelzusammensetzung nach einem der Ansprüche 1 bis 11 hergestellt worden ist.

## Claims

1. Nonaqueous coating material composition comprising
(A) at least one polyhydroxyl group-containing compound (A),
(B) at least one polyisocyanate group-containing compound (B) having free or blocked isocyanate groups
and
(D) at least one catalyst (D) based on a zinc-amidine complex which is preparable by reacting one or more zinc(II) biscarboxylates with an amidine of the formula (I) or with a mixture of two or more amidines of the formula (I) 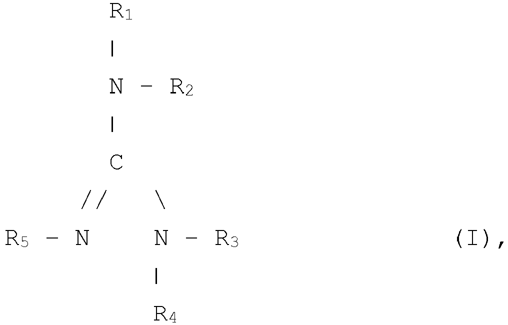
where R₅ = hydrogen and R₁, R₂, R₃, and R₄ are each identical or different radicals, with R₁ and R₃ being hydrogen or an alkyl radical or an aryl radical, and R₂ and R₄ being an alkyl radical or an aryl radical,
**characterized in that**
component (B) has at least one structural unit of the formula (II)
-NR-(X-SiR' 'x(OR')3-x) (II),
and/or at least one structural unit of the formula (III)
-N(X-SiR"x(OR')3-x)n(X'-SiR"y(OR')3-y)m (III),
where
R = alkyl, cycloalkyl, aryl or aralkyl, it being possible for the carbon chain to be interrupted by nonadjacent oxygen, sulfur or NRa groups, where Ra = alkyl, cycloalkyl, aryl or aralkyl,
R' = hydrogen, alkyl or cycloalkyl, it being possible for the carbon chain to be interrupted by nonadjacent oxygen, sulfur or NRa groups, where Ra = alkyl, cycloalkyl, aryl or aralkyl, preferably R' = ethyl and/or methyl,
X, X' = linear and/or branched alkylene or cycloalkylene radical having 1 to 20 carbon atoms, preferably X, X' = alkylene radical having 1 to 4 carbon atoms,
R" = alkyl, cycloalkyl, aryl, or aralkyl, it being possible for the carbon chain to be interrupted by nonadjacent oxygen, sulfur or NRa groups, where Ra = alkyl, cycloalkyl, aryl or aralkyl, preferably R" = alkyl radical, more particularly having 1 to 6 C atoms,
n = 0 to 2, m = 0 to 2, m+n = 2, and x, y = 0 to 2,
and **in that** the coating material composition comprises
(S) at least one monomeric aromatic optionally substituted carboxylic acid (S) whose carboxyl group is in conjugation with a π-electron system.

2. Coating material composition according to Claim 1, **characterized in that** the radicals R₂ and R₄ are identical or different acylic, straight-chain or branched alkyl radicals and/or identical or different aryl radicals, and the radicals R₁ and R₃ are hydrogen or identical or different acyclic, straight-chain or branched alkyl radicals and/or identical or different aryl radicals, preferably **in that** the radicals R₁, R₂, R₃, and R₄ are acyclic aliphatic alkyl radicals, more preferably acyclic aliphatic alkyl radicals having one to four carbon atoms, and very preferably methyl radicals.

3. Coating material composition according to Claim 1 or 2, **characterized in that** the zinc-amidine complex is preparable by reacting 1.0 mole of one or more zinc(II) biscarboxylates with at least 0.1 mole, preferably with 1.0 to 4.0 moles, more preferably with 1.5 to 3.0, and very preferably with 2.0 to 3.0 moles, of one or more amidines of the formula (I).

4. Coating material composition according to any of Claims 1 to 3, **characterized in that** the carboxylate radical of the zinc-amidine complex (D) is selected from the group of the carboxylate radicals of aliphatic linear and/or branched, optionally substituted monocarboxylic acids having 1 to 12 C atoms in the alkyl radical and/or of aromatic, optionally substituted monocarboxylic acids having 6 to 12 C atoms in the aryl radical.

5. Coating material composition according to any of Claims 1 to 4, **characterized in that** the coating material composition comprises at least one zinc-amidine complex (D) in an amount such that the metal content of the zinc-amidine complex, based in each case on the binder fraction of the coating material composition, is between 35 and 2000 ppm, preferably between 35 and 1000 ppm, and more preferably between 100 and 1000 ppm, and/or the coating material composition comprises 0.2% to 15.0% by weight, preferably 0.5% to 8.0% by weight, and more preferably 0.5% to 5.0% by weight, of at least one aromatic carboxylic acid (S), the percentages by weight in turn being based in each case on the binder fraction of the coating material composition.

6. Coating material composition according to any of Claims 1 to 5, **characterized in that** between 10 and 90 mol%, preferably between 20 and 80 mol%, more preferably more than 30 and less than 70 mol% and very preferably between 31 and 50 mol% of the isocyanate groups originally present in component (B) were converted into structural units (II) and/or (III).

7. Coating material composition according to any of Claims 1 to 6, **characterized in that** the total amount of structural units (II) in component (B) is between 5 and 70 mol%, preferably between 8 and 50 mol%, more preferably between 9 and 40 mol%, based in each case on the entirety of the structural units (II) plus (III), and the total amount of structural units (III) in component (B) is between 95 and 30 mol%, preferably between 92 and 50 mol% and more preferably between 91 and 60 mol%, based in each case on the entirety of the structural units (II) plus (III).

8. Coating material composition according to any of Claims 1 to 7, **characterized in that** the polyisocyanate parent structure of component (B) is 1,6-hexamethylene diisocyanate, isophorone diisocyanate and/or 4,4'-methylenedicyclohexyl diisocyanate and/or the isocyanurate trimer thereof and/or the allophanate dimer thereof and/or the biuret dimer thereof and/or the uretdione dimer thereof.

9. Coating material composition according to any of Claims 1 to 8, **characterized in that** component (B) was prepared by reacting the polyisocyanates and/or the isocyanate trimers thereof and/or the allophanate dimers thereof and/or the biuret dimers thereof and/or the uretdione dimers thereof with at least one compound of the formula (IIa)
H-NR-(X-SiR''x(OR')3-x) (IIa)
and/or with at least one compound of the formula (IIIa)
HN(X-SiR''x(OR')3-x)n(X'-SiR''y(OR')3-y)m (IIIa),
where the substituents have the definition given in Claim 1.

10. Coating material composition according to any of Claims 1 to 9, **characterized in that** in component (B) the total amount of structural units (II) is between 9 and 40 mol% and the total amount of structural units (III) is between 91 and 60 mol%, based in each case on the entirety of the structural units (II) plus (III),
and
between 31 and 50 mol% of the isocyanate groups originally present in component (B) were converted into structural units (II) and (III),
and
in component (B) between 26 and 35 mol% of the isocyanate groups originally present were converted into structural units (III).

11. Coating material composition according to any of Claims 1 to 10, **characterized in that** the coating material composition comprises from 20% to 80% by weight, preferably from 30% to 70% by weight, based in each case on the binder fraction of the coating material, of at least one hydroxyl-containing polyacrylate (A) and/or at least one hydroxyl-containing polymethacrylate (A), and/or the coating material composition comprises from 5% to 79% by weight, preferably from 25% to 69% by weight, based in each case on the binder content of the coating material composition, of the compound (B) containing polyisocyanate groups.

12. Multistage coating method **characterized in that** an optionally precoated substrate has applied to it a pigmented basecoat film and thereafter a film of the coating material composition according to any of Claims 1 to 11.

13. Multistage coating method according to Claim 12, **characterized in that** application of the pigmented basecoat film is followed first by drying of the applied basecoat material at temperatures from room temperature to 80°C, and the application of the coating material composition according to any of Claims 1 to 11 is followed by curing at temperatures between 20 and 80°C, more particularly between 20 and 60°C.

14. Use of the coating material composition according to any of Claims 1 to 11 as clearcoat material or use of the method according to Claim 12 or 13 for automotive OEM finishing, the finishing of parts for installation in or on automobiles and/or of utility vehicles, and for automotive refinish.

15. Multicoat color and/or effect paint system composed of at least one pigmented basecoat film and at least one clearcoat film disposed thereon, **characterized in that** the clearcoat film was produced from a coating material composition according to any of Claims 1 to 11.

## Revendications

1. Composition d'agent de revêtement non aqueuse, contenant :
(A) au moins un composé contenant des groupes polyhydroxyle (A),
(B) au moins un composé contenant des groupes polyisocyanate (B) contenant des groupes isocyanate libres ou bloqués, et
(D) au moins un catalyseur (D) à base d'un complexe de zinc-amidine, qui peut être fabriqué par mise en réaction d'un ou de plusieurs biscarboxylates de zinc (II) avec une amidine de formule (I) ou avec un mélange de deux amidines de formule (I) ou plus 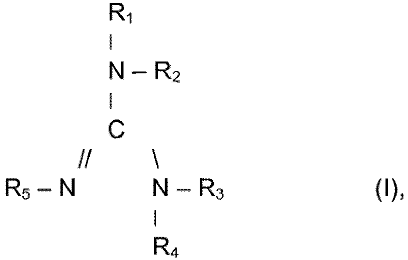
dans laquelle R₅ = hydrogène et R₁, R₂, R₃ et R₄ sont chacun des radicaux identiques ou différents, R₁ et R₃ représentant l'hydrogène ou un radical alkyle ou un radical aryle, et R₂ et R₄ représentant un radical alkyle ou un radical aryle,
**caractérisée en ce que**
le composant (B) comprend au moins une unité structurale de formule (II)
-NR-(X-SiR"x(OR')3-x) (II)
et/ou au moins une unité structurale de formule (III)
-N(X-SiR"x(OR')3-x)n(X'-SiR"y(OR')3-y)m (III)
avec
R = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle,
R' = hydrogène, alkyle ou cycloalkyle, la chaîne carbonée pouvant être interrompue par des groupes oxygène, soufre ou NRa non voisins, avec Ra = alkyle, cycloalkyle, aryle ou aralkyle, de préférence R' = éthyle et/ou méthyle,
X, X' = radical alkylène ou cycloalkylène linéaire et/ou ramifié de 1 à 20 atomes de carbone, de préférence X, X' = radical alkylène de 1 à 4 atomes de carbone,
R" = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle, de préférence R" = radical alkyle, notamment de 1 à 6 atomes C,
n = 0 à 2, m = 0 à 2, m+n = 2, et x, y = 0 à 2,
et **en ce que** la composition d'agent de revêtement contient
(S) au moins un acide carboxylique monomère aromatique éventuellement substitué (S), dont le groupe carboxyle est conjugué à un système d'électrons n.

2. Composition d'agent de revêtement selon la revendication 1, **caractérisée en ce que** les radicaux R₂ et R₄ représentent des radicaux alkyle acycliques, linéaires ou ramifiés identiques ou différents et/ou des radicaux aryle identiques ou différents, et les radicaux R₁ et R₃ représentent l'hydrogène ou des radicaux alkyle acycliques, linéaires ou ramifiés identiques ou différents et/ou des radicaux aryle identiques ou différents, de préférence les radicaux R₁, R₂, R₃ et R₄ représentent des radicaux alkyle acycliques aliphatiques, de manière particulièrement préférée des radicaux alkyle acycliques aliphatiques contenant un à quatre atomes de carbone, et de manière tout particulièrement préférée des radicaux méthyle.

3. Composition d'agent de revêtement selon la revendication 1 ou 2, **caractérisée en ce que** le complexe de zinc-amidine peut être fabriqué par mise en réaction de 1,0 mole d'un ou de plusieurs biscarboxylates de zinc (II) avec au moins 0,1 mole, de préférence avec 1,0 à 4,0 moles, de manière particulièrement préférée avec 1,5 à 3,0 et de manière tout particulièrement préférée avec 2,0 à 3,0 moles, d'une ou de plusieurs amidines de formule (I).

4. Composition d'agent de revêtement selon l'une quelconque des revendications 1 à 3, **caractérisée en ce que** le radical carboxylate du complexe de zinc-amidine (D) est choisi dans le groupe constitué par les radicaux carboxylate d'acides monocarboxyliques aliphatiques linéaires et/ou ramifiés, éventuellement substitués, contenant 1 à 12 atomes C dans le radical alkyle, et/ou d'acides monocarboxyliques aromatiques éventuellement substitués contenant 6 à 12 atomes C dans le radical aryle.

5. Composition d'agent de revêtement selon l'une quelconque des revendications 1 à 4, **caractérisée en ce que** la composition d'agent de revêtement contient au moins un complexe de zinc-amidine (D) en une quantité telle que la teneur en métaux du complexe de zinc-amidine, à chaque fois par rapport à la proportion de liant de la composition d'agent de revêtement, soit comprise entre 35 et 2 000 ppm, de préférence entre 35 et 1 000 ppm, et de manière particulièrement préférée entre 100 et 1 000 ppm, et/ou la composition d'agent de revêtement contient 0,2 à 15,0 % en poids, de préférence 0,5 à 8,0 % en poids et de manière particulièrement préférée 0,5 à 5,0 % en poids, d'au moins un acide carboxylique aromatique (S), les données de % en poids se rapportant à chaque fois à la proportion de liant de la composition d'agent de revêtement.

6. Composition d'agent de revêtement selon l'une quelconque des revendications 1 à 5, **caractérisée en ce qu'**entre 10 et 90 % en moles, de préférence entre 20 et 80 % en moles, de manière particulièrement préférée plus de 30 et moins de 70 % en moles et de manière tout particulièrement préférée entre 31 et 50 % en moles des groupes isocyanate initialement présents dans le composant (B) ont été transformés en unités structurales (II) et/ou (III).

7. Composition d'agent de revêtement selon l'une quelconque des revendications 1 à 6, **caractérisée en ce que** la teneur totale en unités structurales (II) dans le composant (B) est comprise entre 5 et 70 % en moles, de préférence entre 8 et 50 % en moles, de manière particulièrement préférée entre 9 et 40 % en moles, à chaque fois par rapport à la totalité des unités structurales (II) plus (III), et la teneur totale en unités structurales (III) dans le composant (B) est comprise entre 95 et 30 % en moles, de préférence entre 92 et 50 % en moles et de manière particulièrement préférée entre 91 et 60 % en moles, à chaque fois par rapport à la totalité des unités structurales (II) plus (III) .

8. Composition d'agent de revêtement selon l'une quelconque des revendications 1 à 7, **caractérisée en ce que** le corps de base polyisocyanate du composant (B) est le diisocyanate de 1,6-hexaméthylène, le diisocyanate d'isophorone et/ou le diisocyanate de 4,4'-méthylène-dicyclohexyle et/ou leurs trimères isocyanurate et/ou leurs dimères allophanate et/ou leurs dimères biuret et/ou leurs dimères uretdione.

9. Composition d'agent de revêtement selon l'une quelconque des revendications 1 à 8, **caractérisée en ce que** le composant (B) a été fabriqué par mise en réaction des polyisocyanates et/ou leurs trimères isocyanurate et/ou leurs dimères allophanate et/ou leurs dimères biuret et/ou leurs dimères uretdione avec au moins un composé de formule (IIa)
H-NR-(X-SiR"x(OR')3-x) (IIa)
et/ou avec au moins un composé de formule (IIIa)
H-N(X-SiR"x(OR')3-x)n(X'-SiR"y(OR')3-y)m (IIIa)
les substituants ayant la signification indiquée dans la revendication 1.

10. Composition d'agent de revêtement selon l'une quelconque des revendications 1 à 9, **caractérisée en ce que**, dans le composant (B), la teneur totale en unités structurales (II) est comprise entre 9 et 40 % en moles et la teneur totale en unités structurales (III) est comprise entre 91 et 60 % en moles, à chaque fois par rapport à la totalité des unités structurales (II) plus (III),
et
entre 31 et 50 % en moles des groupes isocyanate initialement présents dans le composant (B) ont été transformés en unités structurales (II) et (III),
et
dans le composant (B), entre 26 et 35 % en moles des groupes isocyanate initialement présents ont été transformés en unités structurales (III).

11. Composition d'agent de revêtement selon l'une quelconque des revendications 1 à 10, **caractérisée en ce que** la composition d'agent de revêtement contient de 20 à 80 % en poids, de préférence de 30 à 70 % en poids, à chaque fois par rapport à la proportion de liant de l'agent de revêtement, d'au moins un polyacrylate contenant des groupes hydroxyle (A) et/ou d'au moins un polyméthacrylate contenant des groupes hydroxyle (A) et/ou la composition d'agent de revêtement contient de 5 à 79 % en poids, de préférence de 25 à 69 % en poids, à chaque fois par rapport à la teneur en liant de la composition d'agent de revêtement, du composé contenant des groupes polyisocyanate (B).

12. Procédé de revêtement à plusieurs étapes, **caractérisé en ce qu'**une couche de vernis de base pigmentée, puis une couche de la composition d'agent de revêtement selon l'une quelconque des revendications 1 à 11 sont appliquées sur un substrat éventuellement pré-revêtu.

13. Procédé de revêtement à plusieurs étapes selon la revendication 12, **caractérisé en ce qu'**après l'application de la couche de vernis de base pigmentée, le vernis de base appliqué est tout d'abord séché à des températures allant de la température ambiante à 80 °C et, après l'application de la composition d'agent de revêtement selon l'une quelconque des revendications 1 à 11, durci à des températures comprises entre 20 et 80 °C, notamment entre 20 et 60 °C.

14. Utilisation de la composition d'agent de revêtement selon l'une quelconque des revendications 1 à 11 en tant que vernis transparent ou utilisation du procédé selon la revendication 12 ou 13 pour le vernissage en série d'automobiles, le vernissage de composants automobiles et/ou de véhicules utilitaires et pour le vernissage de réparation automobile.

15. Vernissage multicouche à effet et/ou colorant constitué par au moins une couche de vernis de base pigmentée et au moins une couche de vernis transparent agencée sur celle-ci, **caractérisé en ce que** la couche de vernis transparent a été fabriquée à partir d'une composition d'agent de revêtement selon l'une quelconque des revendications 1 à 11.
